Europäisches Patentamt

(19) European Patent Office

Office européen des brevets

(11) **EP 0 642 837 B1**

(12) **EUROPEAN PATENT SPECIFICATION**

(45) Date of publication and mention
of the grant of the patent:
**20.01.1999 Bulletin 1999/03**

(51) Int. Cl.$^6$: **B05B 7/12**, B05B 7/04,
B05B 13/04, B05B 7/06,
B05B 1/30, F16K 7/07,
B22D 17/20

(21) Application number: **94114109.5**

(22) Date of filing: **08.09.1994**

(54) **Spray process**

Sprühverfahren

Procédé de pulvérisation

(84) Designated Contracting States:
**AT BE CH DE ES FR GB IT LI NL SE**

(30) Priority: **09.09.1993 DE 4330587**
**14.06.1994 DE 4420679**
**23.06.1994 EP 94304560**

(43) Date of publication of application:
**15.03.1995 Bulletin 1995/11**

(73) Proprietor:
**Acheson Industries Deutschland**
**D-89160 Dornstadt (DE)**

(72) Inventors:
• **Keim, Karl-Heinz**
**D-89233 Neu-Ulm (DE)**
• **Kober, Rudi**
**D-73079 Süssen (DE)**
• **Renkl, Hans Dieter**
**D-89180 Berghülen (DE)**

(74) Representative:
**Weickmann, Heinrich, Dipl.-Ing. et al**
**Patentanwälte**
**H. Weickmann, Dr. K. Fincke**
**F.A. Weickmann, B. Huber**
**Dr. H. Liska, Dr. J. Prechtel, Dr. B. Böhm, Dr. W.**
**Weiss,**
**Kopernikusstrasse 9**
**81679 München (DE)**

(56) References cited:
**EP-A- 0 436 241**     **DE-A- 3 430 653**
**FR-A- 2 334 427**     **US-A- 3 672 632**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention pertains to a process for the application of a liquid die wall treatment by means of a spray element, especially for mold sprayers, according to the preamble of claim 1. Such a spray element may comprise a feed line for fluid working medium and possibly a feed line for control air: and an atomizing device connected to the feed line for working medium. The metering or switching valve can be controlled as a function of pressure, with an elastically pretensioned valve body for the optional making or breaking of the connection between the feed line for working medium and the atomizer.

Spray elements of this type are used in, for example, the spray tools of the mold spray devices required between the cycles of die-casting, drop forging, and other manufacturing operations involving the hot and cold working of metals to prepare the parts of the die for the next sequence of operations. For this purpose, the die is opened, and the spray tool is moved in between the parts, which are then cleaned of metal residues, lubricant residues, and other contaminants by the use of compressed air. They are then sprayed with a lubricant and can also be cooled with water.

Spray elements of the basic type in question are known, for example, from the generic U.S. Patent No. 4,714,199 and US Patent No. 4,365,754. In these spray elements, the valve body of the switching valve consists of a piston. The piston is pretensioned by a helical spring to keep the switching valve in the closed position, and in this position the piston thus prevents fluid working medium from passing through the switching valve and reaching the atomizer. According to what has been said above, the spray elements known from U.S. Patents No. 4,714,199 and No. 4,365,754 have a complicated and, therefore, expensive design.

Another spray element of the general type in question is known from U.S. Parent No. 3,807,641. In this spray element, the valve body of the switching valve is formed by a flexible membrane, which is pretensioned by a a piston, which is itself pretensioned by a helical compression spring to keep the switching valve in the closed position. As result, the spray element known from U.S. Patent No. 3,807,641 also has a complicated and, therefore, expensive design.

Against this background, the task of the present invention is to provide a process of the general type in question which is simpler and which therefore can be performed at lower cost.

This task is accomplished in accordance with the invention as claimed in claim 1. Preferably, the valve membrane as a valve body is designed to have an internal elastic pretension. By virtue of this measure, the valve body exercises not only its normal function, namely, of sitting on the valve seat and thus preventing the passage of working medium and, when the valve is opened, of rising above the seat and allowing the passage of working medium, but also the additional function of pretensioning the valve body (that is, of pretensioning itself) in the closing or opening direction of the metering or switching valve. Because several functions are thus combined in a single component according to the invention, the number of components required to realize the spray element is reduced. Therefore, the spray element is simple in design and can thus be fabricated at low cost.

A valve body with the desired properties can be easily produced by making it out of an essentially elastic material, preferably a rubbery type of elastic, plastic or rubber. The desired degree of inner pretension can be effectively achieved through the suitable selection of material for the valve body and through the use of a suitable configuration.

So that the entire switching valve can be replaced as a single unit during maintenance, it is proposed that a valve seat element be provided to constitute the switching valve together with the valve body.

An especially simple way of obtaining the valve seat element is to manufacture it by the process of injection molding. Because the valve body is made of an elastic material, especially of a rubbery type of elastic material, the production tolerances which occur in conjunction with production by injection molding, i.e., tolerances which are possibly greater than those which occur in production by turning or boring, for example, can thus be easily compensated.

The switching valve can be easily inserted into the spray element if a recess to hold the switching valve is provided in a first housing part of the spray element. The feed lines for fluid working medium and possibly for control air can also be designed to pass through the first housing part.

The production of the spray element can be further simplified by assigning the atomizing device to a second housing part, which can be attached to, and removed from, the first housing part. When, in the assembled state of the spray element, the second housing part holds the switching valve in the recess which has been provided in the first housing part, easy access to the switching valve is guaranteed for any maintenance or repair operations which may prove necessary.

To simplify the production of the spray element, it is also proposed that at least one of the housing parts be produced by injection molding.

In principle, it is conceivable that the working medium can be atomized either by electrostatic means, by pressure spraying, by allowing it to strike an impact surface at high speed, or by some other method. So that the working medium can be atomized by compressed air, a feed line for working air which can be connected to the atomizing device is also provided in the spray element according to the invention. The atomizing process can occur here either by the internal mixing principle or by the external mixing principle. Both mixing principles are known in themselves. The spray element can be designed very simply by providing a first section of the feed line for working air in the first housing part and a second section of the feed line for working air in the second housing part.

So that all the conventional spray properties can be realized by means of the process according to the invention, it is proposed that the atomizing device be designed so that it can be connected to a conventional nozzle assembly.

In a preferred embodiment of the invention, it is provided that the valve seat element is designed as cylindrically symmetric and that it has two ring-shaped recesses, separated by a ring-shaped valve seat projection, on its outside periphery. Each of these ring-shaped recesses is bounded in the axial direction of the valve seat element by a ring-shaped supporting projection, and each recess is also connected by way of an associated transverse bore to an associated blind hole formed in the opposing end surface of the valve seat element, it being possible to connect one of the blind holes to the feed line for working medium and the other blind hole to the atomizing device. It is also provided in this embodiment that the valve body is designed as cylindrically symmetric with a central opening oriented in the axial direction, which has essentially the same diameter as the ring-shaped support projections of the valve seat element, the inside peripheral surface of the valve body resting, both in the opened and in the closed state of the switching valve, against the ring-shaped support projections of the valve seat element to form a seal against them. And finally, a chamber which makes it possible for the valve body to rise up off the valve seat element and which possibly can be connected to the feed line for control air is also provided. In this preferred embodiment, the switching valve is distinguished by an especially simple design. The valve body also assumes the function here of sealing off the switching valve against leakage of fluid working medium.

It is also conceivable in principle that the chamber which makes it possible for the valve body to rise can be formed by undercutting a section of the first housing part. To ensure the design of the spray element remains simple; however, it is proposed that this chamber be formed by a ring-shaped recess in the outside peripheral surface of the valve body.

There are various ways in which the switching valve can operate. For example, the switching valve can be a normally closed valve, which is opened by the action of compressed air. In a further elaboration of the preferred embodiment described above, the design can be kept simple by giving the ring-shaped support projections essentially the same outside diameter as the ring-shaped valve seat projection, and arrangements can also be made to allow the chamber which makes it possible for the valve body to rise to be connected to the feed line for control air. In the open state of the switching valve, the negative control air pressure will cause the internal peripheral surface of the valve body to move a certain distance away from the ring-shaped valve seat projection and therefore allow the passage of working medium. In the closed state of the switching valve, the internal pretension of the valve body causes its internal peripheral surface to rest against the ring-shaped valve seat projection to form a seal against it and thus prevent the passage of working medium.

Alternatively, however, it is possible for the valve seat element to have two additional ring-shaped recesses following after the two ring-shaped support projections in the axial direction, each of these two additional recesses being bounded in the area of the associated axial end of the valve seat element by an additional ring-shaped projection. Both these additional ring-shaped projections and the ring-shaped support projections have essentially the same outside diameter as the ring-shaped valve seat projection. In the area of the additional ring-shaped recesses of the valve seat element, two control chambers which can be connected to the feed line for compressed air are provided, between which the chamber making it possible for the valve body to rise is located. In the open state of the switching valve, the positive control air pressure prevailing in the control chambers causes the inside peripheral surface of the valve body in the area of the chamber which makes it possible for the valve body to rise to be lifted up off the ring-shaped valve seat projection and therefore allows the passage of working medium. In the closed state of the switching valve, the inner pretension of the valve body causes it to rest with its inner peripheral surface against the ring-shaped valve seat projection to form a seal against and thus to prevent the passage of working medium. This embodiment offers the advantage that the valve can be operated with positive control air pressure, which is easy to obtain and manage.

So that it can be ensured in this alternative embodiment that the valve body will rise reliably from the valve seat element, it is proposed that the valve body be provided with essentially rigid inlay elements and that these elements be preferably embedded in the valve body. The embedded elements extend from the control-chamber sections of the valve body associated with the valve chamber in question to an intermediate section of the valve body, which is associated with the chamber which makes it possible for the valve body to rise; a deflection of the inlay elements resulting from a compression of the control chamber section under the action of positive control air pressure is transferred to the intermediate section, where it leads to the expansion of the valve body, which therefore rises up off the valve seat.

To realize an alternative method, the switching valve can be a normally open one, which is closed by the control air pressure. In a further elaboration of the preferred embodiment discussed above, the ring-shaped support projections can have a larger outer diameter than the ring-shaped valve seat projection, and arrangements can be made so that the chamber which makes it possible for the valve body to rise can be connected to the control air feed line. In the open state of the switching valve, the internal pretension of the valve body causes it to remain a certain distance away from the ring-shaped valve seat projection and, therefore, makes it possible for the working medium to pass through. In the closed state of the switching valve, a positive control air pressure causes the internal peripheral surface of the valve body to rest against the ring-shaped valve seat projection of the valve seat element to form a seal against it, thus preventing the passage of working medium. This embodiment also offers the advantage of simplicity of design.

In a realization of yet another alternative method, the switching valve can be a normally closed valve, which is opened by the pressure of the working medium. In this embodiment, the control air feed line can be eliminated, which leads to an additional simplification of the design. In an elaboration of the preferred embodiment described above, the ring-shaped support projections can, in this case, have essentially the same outside diameter as the ring-shaped valve seat projection. Thus, in the open state of the switching valve, a positive working medium pressure causes the internal peripheral surface of the valve body to remain a certain distance away from the ring-shaped valve seat projection and, therefore, makes it possible for the working medium to pass through. In the closed state of the switching valve, the internal pretension of the valve body causes its internal peripheral surface to rest against the ring-shaped valve seat projection to form a seal against it and thus prevents the passage of working medium.

So that the proper function of the switching valve can be ensured at all times, it is proposed that the chamber making it possible for the valve body to rise be connected by way of a compensating line to the environment.

To increase the operational reliability of the process according to the invention, it is also proposed that a pressure-monitoring device be installed in the control air feed line. It is possible, for example, for the supply of working medium to be cut off whenever this pressure monitor detects an abnormal value of the control air pressure. This is advantageous especially in the case of a normally open switching valve which is closed by control air pressure.

The, invention also pertains to a valve seat element, to a valve body, and to a switching valve for a spray element for use in the process according to the invention.

Preferably, the invention pertains to a spray element, especially for die sprayers, comprising a feed line for fluid working medium, a feed line for forking air, and an atomizer connected to the feed lines for working medium and working air, a pivoting nozzle element being assigned to the atomizer.

Spray elements of this type are known and are used, for example, in the die sprayers of the applicant so that sprayers can be set up as effectively as possible at the place where they are needed to meet the specific requirements of the work in question through the adjustment of the spray direction of the individual spray elements. It has been found in practice, however, that the known spray elements generate a relatively large amount of noise, with the result that the operators must work with hearing protection.

Against this background, it is a further goal to provide a spray element of the type described above which is distinguished by a considerable reduction in the amount of noise generated without sacrifice of the pivoting capacity of the nozzle element.

This goal is accomplished in that the atomizer operates according to the external mixing principle and in that a section of the working medium feed line leading to the pivoting nozzle element is designed as a section of flexible tubing. The air pressure required to atomize the working medium by the external mixing principle to produce a given set of atomization properties is smaller than that required for atomization by the internal mixing principle, according to which the conventional spray elements operate with a pivoting nozzle. According to the internal mixing principle, a mixing chamber bust be provided, from which the compressed air emerges at high velocity to atomize the working medium sufficiently and to preserve the achieved atomization properties until after the mist has emerged from the nozzle element. According to the external mixing principle, the working medium is atomized only after it has emerged from the nozzle. At this point, the working air can be made highly turbulent even without the help of a high working air pressure, which means that the working medium can still be atomized effectively. In addition, a relatively low working air pressure is sufficient to supply the working air to the outlet, because the nozzle element can be designed with large open cross sections for the compressed air. The, latter design feature is possible, because there is no dynamic pressure to be overcome in the atomizer. The effects described above, which are mutually supportive, lead to a considerable reduction in the amount of noise generated without having any effect on the desirable properties of the atomized material. Through the use of a section of flexible tubing, the capacity of the nozzle element to pivot is retained at the same time.

The section of tubing can be fabricated inexpensively by making it of rigid plastic.

So that not only the spray direction but also the spray pattern of the spray element can be adjusted to the requirements of the specific application, it is proposed that the relative position of the orifice of the feed line for working medium and an outlet of the nozzle element be adjustable in the longitudinal direction of the working medium feed line.

This can be achieved in accordance with an preferred elaboration of the invention by, for example, providing the nozzle element with a central bore, through which the flexible section of tubing extends up to a point near the outlet. In this case, the position of the orifice of the tube can be adjusted simply by pushing the tube back and forth in the central bore relative to the outlet. The tube can be held in the central bore by the frictional forces resulting from a narrow-tolerance fit. It is also possible, however, for the tube to be held in position in the central bore by suitable fastening means such as a stud screw.

According to another preferred elaboration of the invention, it is provided that the nozzle element has a central bore provided with an internal, ring-shaped rib; that the flexible section of tubing can be inserted into the central bore essentially up as far as the ring-shaped rib; and that a tubular endpiece, which can be shifted in the longitudinal direction of the central bore, can be inserted from the outlet side into the central bore. The tubular endpiece can be designed so that it can screwed into the central bore to adjust its position in the longitudinal direction in the central bore. The endpiece can also be held in place in the central bore by a suitable fastener such as a stud screw.

A further noise reduction can be achieved by providing a deflector wall for the arriving working air near the outlet. Such a wall increases the turbulence of the working air, which increases in turn the atomization of the working medium; or, if there is no need to increase the degree of atomization, the use of the deflector makes it possible to work with a lower working air pressure, which leads to a corresponding decrease in noise generation.

Preferably, the invention also pertains to a nozzle element for use in the process according to the invention.

The invention is described in greater detail below on the basis of the attached drawing and a group of exemplary embodiments:

- Figure 1 is a schematic diagram of a die sprayer, in the spray tool of which the spray element used in the process according to the invention can be installed;
- Figure 2 shows a schematic diagram of a spray tool equipped with spray elements used in the process according to the invention;
- Figure 3 shows a first embodiment of a spray element used in the process according to the invention;
- Figure 4 shows a second embodiment of a spray element used in the process according to the invention;
- Figure 5 shows a third embodiment of a spray element used in the process according to the invention;
- Figure 6 shows a fourth embodiment of a spray element used in the process according to the invention with a closed switching valve;

- Figure 7 shows a view of the fourth embodiment similar to that of Figure 6, but with an open switching valve;
- Figure 8 shows a cross section through a valve body for the fourth embodiment on an enlarged scale;
- Figure 9 shows a schematic, perspective diagram of an inlay element assembly for a valve body according to Figure 8;
- Figure 10 shows a first embodiment of a spray nozzle element;
- Figure 11 shows a second embodiment of a spray nozzle element; and
- Figure 12 shows a third embodiment of a spray nozzle element.

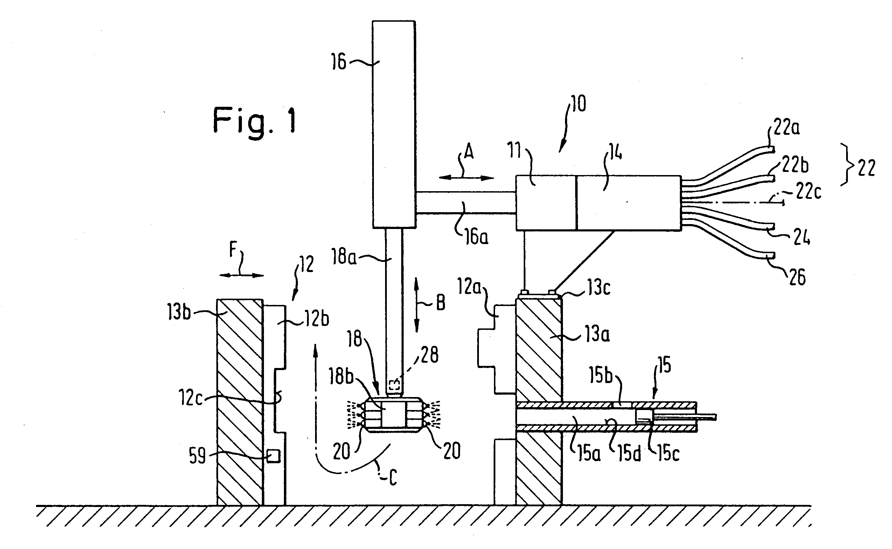

Figure 1 shows a schematic diagram of a die sprayer, referred to as *10* in the following, which can be used, for example, to prepare die components *12a* and *12b* of a die *12* for the next stage of work in the production of structural components by means of a die-casting method such as aluminum die-casting.

In a die-casting method such as this, a filling chamber *15a* of a filling device *15* is loaded through fill opening *15b* with the liquid metal to be processed. Then the metal is forced by a pressure piston *15c* into die *12*. After the component thus fabricated has solidified completely, it is removed from the die. Die parts *12a*, *12b* of die *12* are mounted for this purpose on a stationary clamping plate *13a* and a movable clamping plate *13b*, respectively. Movable clamping plate *13b* can be shifted back and forth in the directions of double arrow *F* to open and close die *12*. Although only two clamping plates *13a*, *13b* with two die parts *12a*, *12b* are shown in Figure 1, it is also possible, of course, to use dies with more than two parts and a corresponding number of clamping plates.

Die sprayer *10* comprises a first travel unit *14*, which is mounted permanently on an upper edge *13c* of stationary clamping plate *13a*. A second travel unit *16* is connected to first travel unit *14*. This second unit can be moved horizontally back and forth, relative to first travel unit *14*, in the direction of double arrow *A* by means of an arm *16a*, guided in first travel unit *14*, under the action of a drive (not shown). In a similar manner, a spray tool *18*, which carries a plurality of spray elements *20*, can be moved vertically up and down relative to second travel unit *16* in the direction of double arrow *B* by means of an arm *18a* guided in second travel unit *16* under the action of a drive (also not shown).

First travel unit *14* is connected to supply lines *22* for fluid working medium. to a supply line *24* for working air or blasting air, and to a supply line *26* for control air. These supply lines *22*, *24*, *26* are guided from first travel unit *14* all the way to spray tool *18*. For the sake of clarity in the drawing, however, only the sections of these lines leading to first travel unit *14* are shown in Figure 1.

Supply lines *22* for the working medium comprise a supply line *22a* for water and a supply line *22b* for lubricant. It is also possible, however, to provide additional supply lines *22* for working media such as for a second type of lubricant or the like, as indicated in Figure 1 by dash-dot line *22c*. A valve device *28* is provided in spray tool *18* or immediately in front of it so that the various supply lines *22a*, *22b*, etc., for working medium can be connected for service.

So that die *12* can be prepared for the next sequence of operations, die *12* is first opened and the finished part is removed. Then spray tool *18* is moved between the two halves *12a*, *12b* of the die by means of arms *16a*, *18a*. Then die parts *12a*, *12b* are cleaned of metal residues, lubricant residues, and other contaminants; cooled by sprays of water; sprayed with lubricant to prepare them for the next step of the work cycle; and possibly dried with blasts of air.

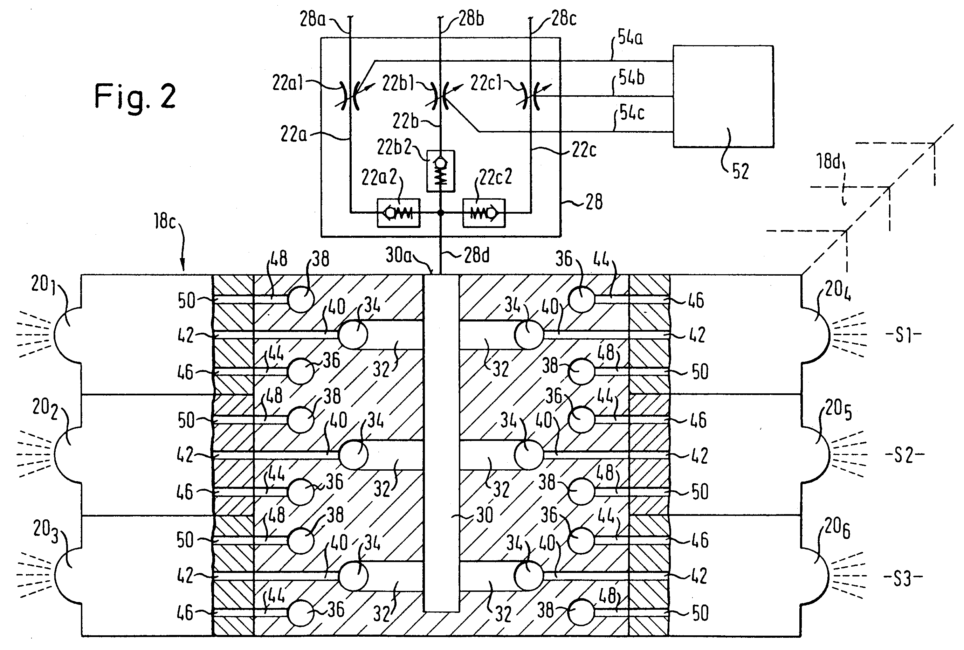

Figure 2 shows a detailed drawing of the design of spray tool *18*. In the present example, six spray elements *20* are installed on spray tool *18*. The number and orientation of the spray elements can be varied in any way desired as a function of the specific application.

In spray tool *18*, a main working medium line *30* is provided, from which secondary lines *32* branch off; in the drawing according to Figure 2, these secondary lines extend in the plane of the drawing. From these secondary lines *32*, junction working medium lines *34* branch off in turn, which, in the drawing according to Figure 2, extend through the spray tool at a right angle to the plane of the drawing. In addition, junction lines *36* for blasting air or working air and *38* for control air are also provided in spray tool *18*, again extending at a right angle to the plane of the drawing. These junction lines *36*, *38* are connected to corresponding (not shown) main and secondary lines for working air and control air, respectively, which are designed in the same way as lines *30* and *32*. The open ends of junction lines *34*, *36*, and *38* are sealed by cover plates *18b* (see Figure 1).

Spray elements *20* can be coordinated into a plurality of control circuits. For example, in Figure 2, spray elements *20₁* and *20₄* are combined into a control circuit *S1*; spray elements *20₂* and *20₅* are combined into a control circuit *S2*; and spray elements *20₃* and *20₆* are combined into a control circuit *S3*.

This coordination can be realized in a simple way by connecting each of junction lines 38 for control air, i.e., the junction line assigned to spray elements *20₁* and *20₄* of control circuit *S1*, the junction line assigned to spray elements *20₂* and *20₅* of control circuit *S2*, and the junction line assigned to spray elements *20₃* and *20₆* of control circuit *S3*, to a separate main line for control air. The main control air lines of the individual control circuits can be supplied with control air independently of each other by means of, for example, a valve device (not shown).

From junction lines *34* for working medium, feed bores *40* lead to corresponding working medium feed lines *42* of spray elements *20*; from junction lines *36* for working air, feed bores *44* lead to corresponding working air feed lines *46* of spray elements *20*; and from junction lines *38* for control air, feed bores *48* leads to corresponding control air feed lines *50* of spray elements *20*.

Inlet *30a* of main line *30* for working medium shown in Figure 2 is connected to an outlet line *28d* of valve device *28*. Supply lines *22a*, *22b*, and *22c* are connected to inlet lines *28a*, *28b*, and *28c*. respectively, of valve device 28. A flow rate control valve *22a1*, *22b1*, and *22c1* and a check valve *22a2*, *22b2*, and *22c2* are installed in each of inlet lines *28a*, *28b*, and *28c*, respectively.

The pass-through openings of control valves *22a1*, *22b1*, and *22c1* can be adjusted independently of each other by means of a control unit *52* acting through control lines *54a*, *54b*, and *564c*. For example, by opening valve *22a1* and closing valves *22b1* and *22c1*, only water can be supplied as the working medium: by opening valve *22b1* and closing valves *22a1* and *22c1*, only lubricant can be supplied; or by opening of valves *22a1* and *22b1* appropriately and closing valve *22c1*, a lubricant mixture in a desired ratio can be supplied as working medium. Control unit *52* can be used to achieve wide variations in the discharge rates, viscosities, etc. of the working media to be mixed by varying, for example, the degrees to which valves *22a1*, *22b1*, *22c1* are opened.

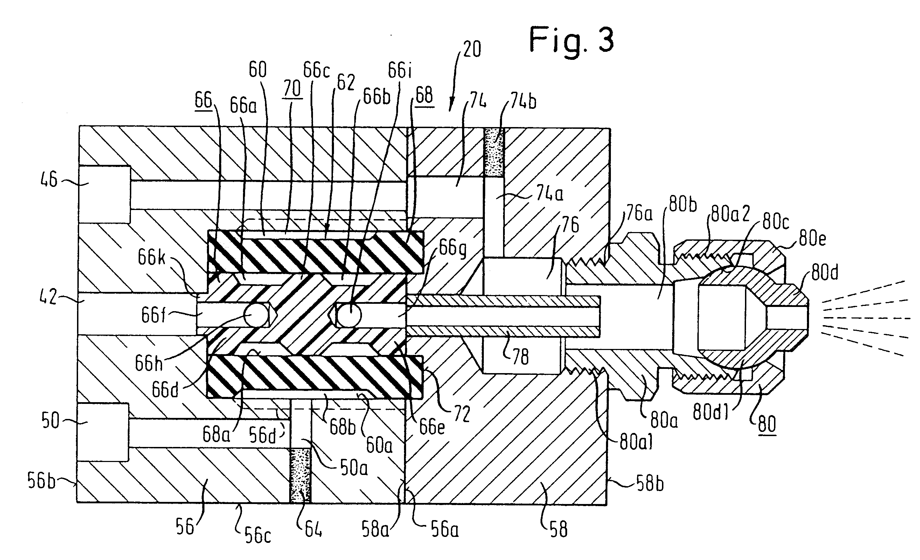

Figure 3 shows a first embodiment of a spray element *20.* Spray element *20* comprises a first housing part *56* and a second housing part *58*, which are preferably manufactured as injection-molded parts, with surfaces *56a* and *58a* resting against each other. The two parts are screwed together by means of threaded bolts (not shown). Feed line *42* for fluid working medium, feed line *46* for working air, and feed line *50* for control air are provided in first housing part *56*.

Feed line *42* for working medium starts from a surface *56b* facing away from surface *56a* and extends toward surface *56a*, ending at a recess *60* of circular cross section, which is open toward surface *56a*. Recess *60* holds a switching valve *62*, the structure of which will be described in detail further below. Feed line *46* for working air connects the two surfaces *56a*, *56b* to each other, and feed line *50* for control air, which also proceeds from surface *56b*, ends at transverse bore *50a*, which connects an outside peripheral surface *56c* of the spray element with inside peripheral surface *60a* of recess *60*. The outer end of transverse bore *50a* is sealed tightly by a plug *64*.

In the ready-to-operate state of spray element *20*, a switching valve *62* is present in recess *60* of the first housing part *56*, as already described above. This valve comprises a valve seat element *66* and a valve body *68*. The symmetry of both valve seat element *66* and valve body *68* is essentially cylindrical.

Valve seat element *66* has on its outside peripheral surface two ring-shaped recesses *66a, 66b*, which are separated in the axial direction by a ring-shaped projection *66c*, forming a valve seat, and bounded by two additional ring-shaped projections *66d, 66e*. Ring-shaped projections *66c, 66d*, and *66e* all have essentially the same outside diameter. From the axial ends of valve seat element *66*, blind holes *66f, 66g* proceed, the blind ends of which are connected by transverse bores *66h, 66i* to ring shaped recesses *66a, 66b*. To center valve seat element *66* in recess *60*, a tubular shoulder *66k* of the element engages in feed line *42* for working medium. The axial length of valve seat element *66* is calculated in such a way that, in the operating state of spray element *20*, its end surface is essentially flush with surface *58a*. Valve seat element *66* is preferably made as an injection-molded part.

Valve body *68* is tubular in design and surrounds valve seat element *66*. For this purpose, an inside diameter of its passage *68a* is essentially the same as or slightly smaller than the outside diameter of ring-shaped projections *66c, 66d*, and *66e* of valve seat element *66*. On the outside periphery of valve body *68*, there is a ring-shaped recess *68b*, which cooperates with inside peripheral surface *60a* of recess *60* to define a chamber *70*, which makes it possible for valve body *68* is rise up from valve seat *66c*. The outside diameter of valve body *68* is essentially the same as the inside diameter of recess *60*.

Alternatively, chamber *70* could also be formed by an undercut *56d* shown in broken line in Figure 3. In this case, there would be no need for the ring-shaped recess *68b* on the outer periphery of valve body *68*.

In the operating state, valve body *68* of spray element *20* projects beyond surface *56a* and engages in a ring-shaped groove *72*, formed in second housing part *58*, this groove being used to center switching valve *62*. Feed line *46* for blasting air continues in second housing part *58* as a line *74*, which ends in a mixing chamber *76* by way of a transverse bore *74a*, tightly sealed by a plug *74b* at its outer end. Chamber *76* opens out onto a surface *58b* of the second housing part facing away from surface *58a*. This orifice *76a* accepts a nozzle assembly *80*.

Nozzle assembly *80* comprises a tubular main part *80a*, at one end of which an externally threaded section *80a1* is provided. Main part *80a* is screwed into orifice *76a* of second housing part *58* by means of this externally threaded section *80a1*. At its other end, main part *80a* is designed with an externally threaded section *80a2*. In the area of this externally threaded section *80a2*, an inside space *80b* of main part *80a* is provided with an essentially spherical inside surface *80c*. A ball joint *80d1* of a nozzle element *80d* rests against this inside surface *80c*; the ball is held in position by a cap nut *80e* screwed onto externally threaded section *80a2*.

A section of tubing *78* connected to blind hole *66g* in the valve seat element passes through chamber *76* and projects into inside space *80b* of main part *80a*. In this inside space *80b*, working medium emerging from tube *78* is atomized according to the so-called internal mixing principle by compressed air arriving from mixing chamber *76* and thus is blown out through nozzle element *80d*.

In the following, the function of spray element *20* according to Figure 3 is explained. Switching valve *62* of spray element *20* is normally a closed valve, which is opened by a negative control air pressure. In Figure 3, the normal state of switching valve *62* is shown, that is, its closed state. In this state, the inside peripheral surface of valve body *68* rests against valve seat *66c* to form a seal and therefore prevents the working medium coming through line *42*, blind hole *66f*, transverse bore *66h*, and ring-shaped recess *66a*, from passing between valve seat *66c* and valve body *68* and then continuing through ring-shaped recess *66b*, transverse bore *66i*, blind hole *66g*, and section of tubing *78* into inside space *80b* of nozzle assembly *80*.

But when a negative control air pressure is applied via control air line *50* to chamber *70*, valve body *68* is lifted up off of valve seat *66c* by this negative pressure and allows the passage of working medium between valve seat *66c* and valve body *68*. Fluid working medium now arrives from feed line *42* in interior space *80b* of nozzle assembly *80*, where it is atomized by the blasting air conducted via feed lines *46, 74, 74a* and chamber *76* into interior space *80b*. The medium is then carried to nozzle element *80d*, from which it emerges as a mist.

Valve body *68* is made of an elastic material such as rubber and is produced with an internal pretension, which pretensions it in the closed position; that is, in the position in which it prevents the passage of working medium between valve seat *66c* and valve body *68*.

The design of switching valve *62* as a normally closed valve offers the advantage that, for example, in the event that the control system fails because of a power outage, any further escape of working medium is reliably prevented. It is also possible, however, to design the switching valve as a normally open valve, which is closed by the control air pressure.

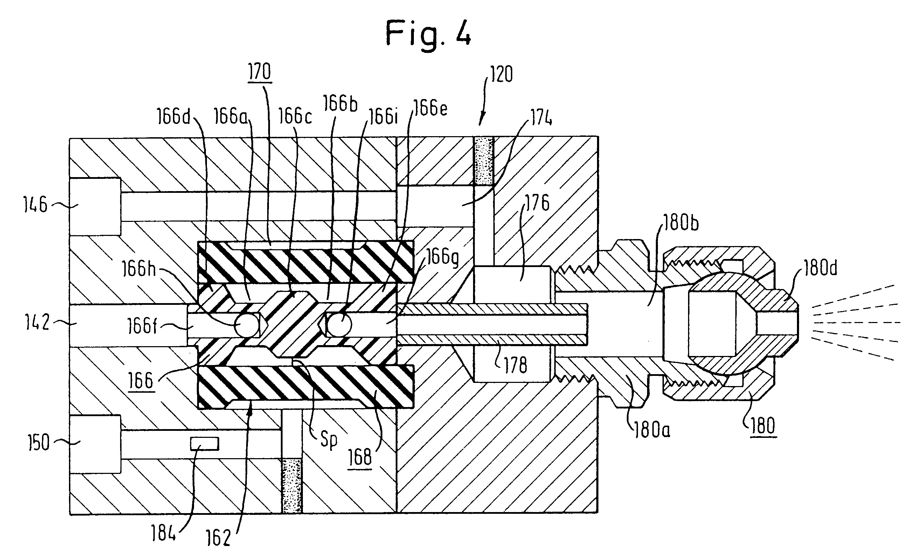

Figure 4 shows a spray element equipped with a normally open switching valve of this type, which is closed by control air pressure. In Figure 4, similar parts are provided with the same reference symbols as those used in Figure 3, except that they are increased by 100. Spray element *120* is described in the following only insofar as it differs from spray element *20* according to Figure 3. Otherwise, reference is made here explicitly to the description of spray element *20*.

According to Figure 3, spray element *120* differs from spray element *20* only in that ring-shaped valve seat projection *166c* of valve seat element *166* of switching valve *162* has an outside diameter which is smaller than that of ring-shaped projections *166d, 166e*. Because the diameter of the tubular opening of valve body *168* has the same diameter as that of ring-shaped projections *166d*, *166e* or a diameter only slightly smaller, a gap *Sp* is present between the inside peripheral surface of valve body *168* and the outside peripheral surface of valve seat *166c* in the normal state of switching valve *162*; that is, in the state unactuated by control air pressure. Because of this gap *Sp*, it is possible for fluid working medium to pass from line *142* through blind hole *166f* and transverse bore *166h* to ring-shaped recess *166a* and then to flow between valve seat *166c* and valve body *168* into ring-shaped recess *166b*, and from there through transverse bore *166i*, blind hole *166g*, and section of tubing *178* into interior space *180b* of nozzle assembly *180*. Here the working medium is atomized by the blasting air conducted via feed lines *146*, *174* and chamber *176* into interior space *180b* of nozzle assembly *180*. The medium is then conducted to nozzle element *180d*, from which it emerges as a mist.

To block the passage of working medium between valve seat *166c* and valve body *168*, a positive pressure is applied to chamber *170* (the chamber which makes it possible for the valve body to rise) via control air feed line *150*; this positive pressure presses valve body *168* against valve seat *166c*. Through adjustment of the control air pressure, it is also possible effectively to meter the amount of working medium being supplied. Valve body *168*, which is made of an elastic material, preferably of a rubbery type of elastic material, is pretensioned in such a way that it returns automatically to its normal or open position shown in Figure 4 as soon as the positive control air pressure has been turned off.

In control air feed line *150*, a pressure sensor *184* is installed, which measures the value of the pressure prevailing in the feed line and sends this information to control unit *52* (see Figure 2). Whenever pressure monitor *184* in feed line *150* detects an unintended pressure drop, control unit *52* closes control valves *22a1*, *22b1*, *22c1* (see Figure 2), so that no more working medium can be supplied through control line *142*.

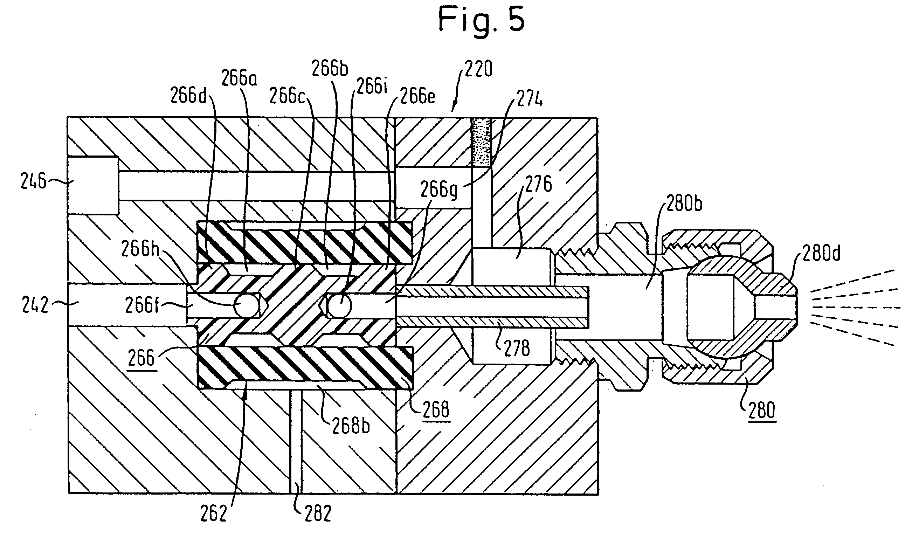

Figure 5 shows a third embodiment of a spray element equipped with a normally closed switching valve, which is opened by the pressure of the working medium. In Figure 5 similar parts are provided with the same reference symbols as those in Figure 3, except that they are increased by 200. Spray element *220* is described in the following only to the extent that it differs from spray element *20* according to Figure 3. Otherwise, reference is made explicitly here to the description of spray element *20*.

According to Figure 3, spray element *220* differs from spray element *20* primarily in that no line corresponding to control air feed line *50* is provided. Ring-shaped projection *266c* forming the valve seat has essentially the same diameter as that of ring-shaped projections *266d*, *266e*. Therefore, in the normal or closed state of switching valve *262* shown in Figure 5, valve body *268*, by virtue of its internal pretension, rests with its inside peripheral surface firmly on valve seat *266c*.

When working medium is now introduced into ring-shaped recess *266a* via feed line *242*, blind hole *266f*, and transverse bore *266h*, it cannot pass by valve seat *266c* into ring-shaped recess *266b*, because the hydraulic force exerted by the pressure of the working medium on valve body *268* is at first smaller than the force of the internal pretension of valve body *268*. When the pressure of the working medium rises above a limit pressure $p_G$, however, the internal pretension of valve body *268* is overcome by the hydraulic force and the valve body is lifted up off of valve seat *266c*. Working medium is thus able now to pass into ring-shaped recess *266b* and then to proceed through transverse bore *266i*, blind hole *266g*, and section of tubing *278* into the interior space *280b* of nozzle assembly *280*. Here the working medium is atomized by the blasting air conducted via feed lines *246*, *274*, and mixing chamber *276* into interior space *280b* of the nozzle assembly *280*; and the atomized medium is then carried onwards to nozzle element *280d*, from which it emerges as a spray mist.

To be able to ensure that valve body *268* is always lifted up off of valve seat *266c* at the same limit pressure $p_G$, a compensating bore *282* is provided, which connects ring-shaped space *268b* on the outer periphery of valve body *268* to the outside environment. Valve body *268* does not return to its closed position shown in Figure 5 until a second limit pressure $p_G'$ is reached, which is smaller than limit pressure $p_G$, because the surface area of valve body *268* acted on by the hydraulic pressure in the open state is greater than the surface area of the valve body acted on by the hydraulic pressure in the closed state.

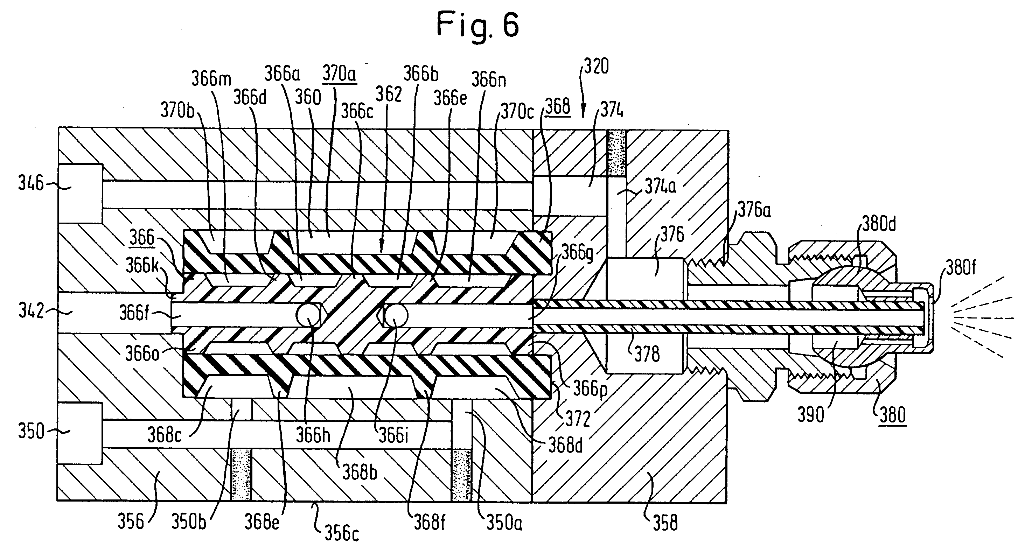

Figure 6 shows a fourth embodiment of a spray element, where similar parts are provided with the same references symbols as those used in Figure 3, except that they are increased by 300. Spray element *320* is described in the following only to the extent that it differs from spray element *20* according to Figure 3. Otherwise, reference is made explicitly here to the description of spray element *20*.

Spray element *320* is equipped, like spray element *20* according to Figure 3, with a normally closed switching valve *362*, which is opened by control air. Switching valve *362*, however, is designed in such a way that it can be opened by means of a positive control air pressure.

Valve seat element *366* has on its outside peripheral surface not only ring-shaped recesses *366a*, *366b*, which are bounded by ring-shaped projections *366d*, *366e* and connected to blind holes *366f*, *366g*, but also two additional ring-shaped recesses *366m*, *366n*. which are bounded by ring-shaped projections *366d*, *366e* and by two additional ring-shaped projections *366o*, *366p*. Ring-shaped projections *366c*, *366d*, *366e*, *366o*, *366p* all have essentially the same outside diameter.

Valve body *368* has a tubular design. Its inside diameter is essentially the same as, or slightly smaller than, the outside diameter of ring-shaped projections *366c, 366d, 366e, 366o, 366p* of valve seat element *366*.

On the outside periphery of valve body *368*, a ring-shaped recess *368b* is provided, which, with the cooperation of the inside peripheral surface of recess *360*, defines a chamber *370a*, which makes it possible for valve body *368* to be lifted up off of valve seat *366c*. In the assembled state of switching valve *362*, chamber *370a* extends essentially over the area of ring-shaped recesses *366a, 366b* of valve seat element *366*. Valve body *368* also has two ring-shaped recesses *368c*, *368d*. which, with the cooperation of the inside peripheral surface of recess *360*, define two chambers *370b*, *370c*. Chambers *370a, 370b,* and *370c* are separated from each other by ring-shaped projections *368e, 368f* of valve body *368*. In the assembled state of switching valve *362*, chambers *370b, 370c* extend essentially over the area of ring-shaped recesses *366m, 366n* of valve seat element *366*.

Chambers *370b, 370c* are connected by transverse bores *350b, 350a* to control air feed line *350*. Chambers *370b, 370c* can also be formed, alternatively, by undercuts in first housing part *356*.

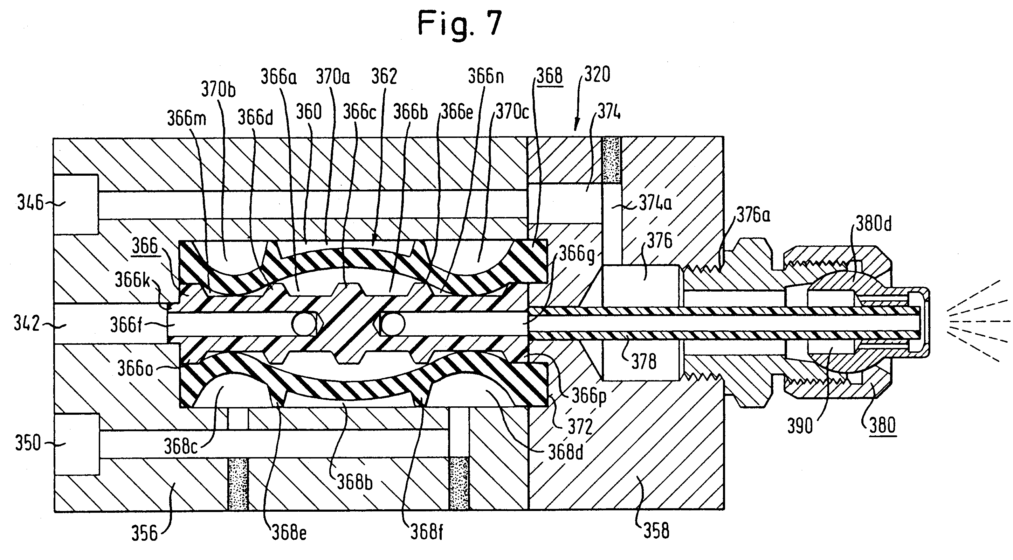

In the following, the function of switching valve *362* is explained in greater detail with reference to Figures 6 and 7.

Switching valve *362* of spray element *320* is a normally closed valve, which is opened by control air pressure. According to Figure 3, in contrast to switching valve *62*, switching valve *362* can be opened by a positive control air pressure.

Figure 6 shows the normal state of switching valve *362*, that is, its closed state. In this state, the inside peripheral surface of valve body *368* rests to form a seal against valve seat *366c* and, therefore, prevents the flow of working medium from line *342* to nozzle assembly *380*.

But when a positive control air pressure is applied to chambers *370b, 370c* through control air line *350*, valve body *368*, as shown in Figure 7, is pressed by this positive pressure into ring-shaped recesses *366m*, *366n*. This deformation of valve body *368* also extends into the area of valve body *368* situated near chamber *370a*; ring-shaped projections *368e, 368f* of the valve body act as pivot lines, with the result that valve body *368* is lifted up off of valve seat *366c* in the area of chamber *370a*, and working medium is now able to flow between valve seat *366c* and valve body *368*.

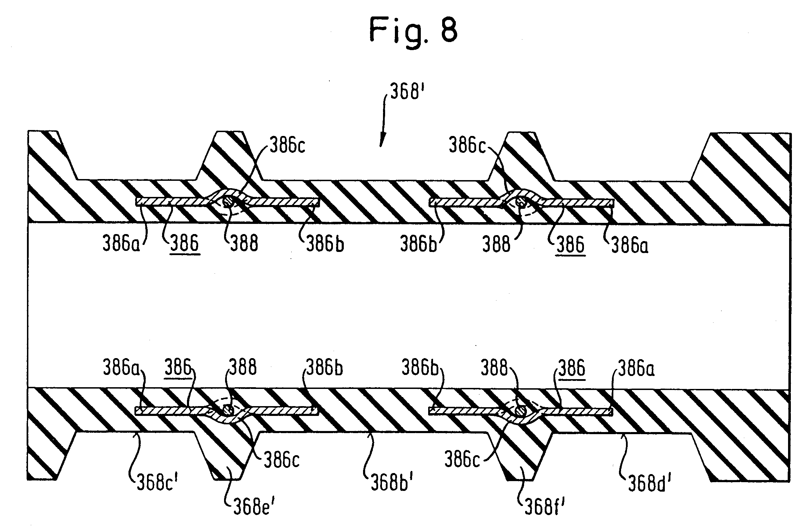

Figure 8 shows another embodiment of a valve body, by means of which the function described above can be realized in an especially effective manner.

Elongated inlay elements *386* are embedded in valve body *368'*; these inlay elements are made, for example, of steel or some other suitably rigid material. One longitudinal end *386a* of each inlay element *386* is located in a section of valve body *386'* which is assigned to one of the outer ring-shaped grooves *368c'*, *368d'*, while the other longitudinal end *386b* is located in a section of valve body *386'* which is assigned to central ring-shaped groove *368b'*.

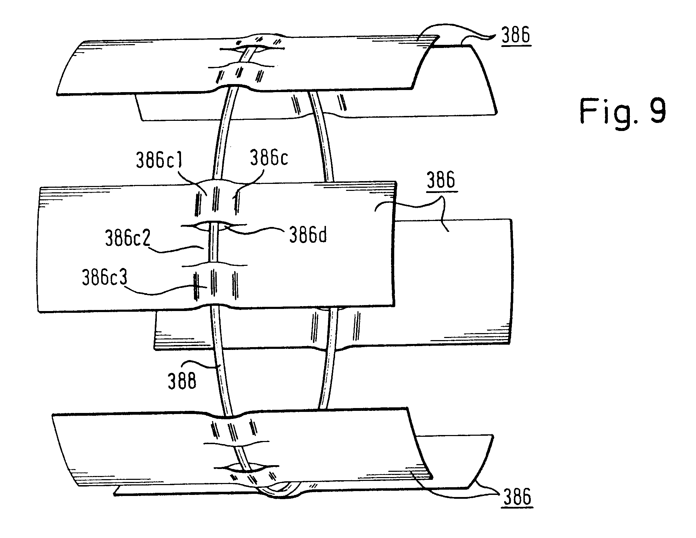

As shown with particular clarity in Figure 9, inlay elements *386* have, in a middle section *386c*, bumps *386c1, 386c2, 386c3*, which are pushed up in alternating directions with respect to the normal to the surface of each inlay element *386*. Alternating bumps *386c1, 386c2, 386c3* form an access channel *386d*, though which a wire hoop *388* is pulled. In the example shown, six inlay elements *386* are lined up in a row on wire hoop *388*, but any suitable number of inlay elements desired can be provided. Wire hoops *388* are located near ring-shaped projections *368e'*, *386f'* (see Figure 8).

When the section of valve body *368'* assigned to ring-shaped grooves *368c'*, *368d'* is compressed as a result of a control air pressure applied to chambers *370b, 370c* (see Figure 7), ends *386a* of inlay elements *386* pivot inward around wire hoop *388*, which serves as the axis of rotation. Because of the rigidity of inlay elements *386*, opposite ends *386b* of inlay elements *386* swing outward and, therefore, lead to an expansion of the section of valve body *368'* assigned to ring-shaped groove *386b'*. Thus, a simple and reliable way of ensuring that inlay elements *386* are able to lift valve body *368'* up off of valve seat *366c* is obtained (see Figure 7).

As an alternative, it is also possible to lay inlay elements *386* on the inside peripheral surface of valve body *368'* rather than to embed them, so that, in the assembled state of switching valve *362*, they will be located between valve seat element *366* and valve body *368'*.

Spray element *320* according to Figure 6 also differs from spray element *20* according to Figure 3 also with respect to the feed lines to the nozzle assembly and the design of the nozzle element.

Feed line *346* for blasting air continues in second housing part *358* in the form of a line *374/374a*, which ends at a chamber *376*. In an orifice *376a* of this chamber *376*, a nozzle assembly *380* is installed, the design of which is essentially the same as that of nozzle assembly *80* according to Figure 3. In contrast to that assembly, however, nozzle assembly *380* has a nozzle element *380d* which operates by the external mixing principle, according to which working medium is atomized outside the nozzle element by turbulent compressed air. A section of tubing *378* connected to blind hole *366g* of valve seat element *366* serving to supply working medium, therefore, extends all the way to nozzle element *380d*, passes through it, and finally ends at an outlet opening *380f*.

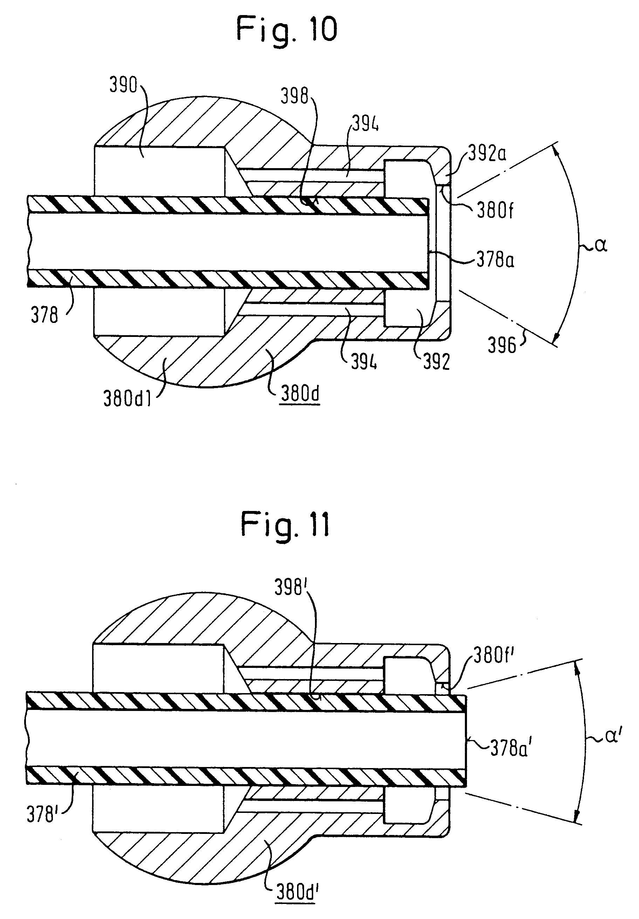

In the following, the design of nozzle element *380d* is explained in detail on the basis of Figure 10.

In a ball joint *380d1* of nozzle element *380d*, a recess *390* is made on the side of nozzle element *380d* opposite outlet *380f*. On its outlet end, nozzle element *380d* has a turbulence chamber *392*, into which tube *378* opens. Recess *390* and turbulence chamber *392* are connected to each other by way of longitudinal bores *394*. Tube *378* is inserted through a central longitudinal bore *398* of nozzle element *380d* and is held in position there by friction. In addition or alternatively thereto, it is possible to provide a stud screw (not shown) in nozzle element *380d* to fasten the tube in place. To make it possible for nozzle element *380d* to pivot, tube *378* is made of a flexible material such as rigid plastic, etc.

As can be seen in Figures 6 and 7, recess *390* is connected to compressed air chamber *376*. Compressed air arriving from the chamber passes through bores *394* on its way into turbulence chamber *392*. With reference to Figure 10 again, the compressed air is conducted through bores *394* onto an outlet-side boundary wall *392a* of turbulence chamber *392*, which serves as a deflector wall to create turbulence in the stream of air. Working medium emerging from tube *378* is atomized by the turbulent compressed air outside outlet *380f* to form a spray mist *396*.

By means of the embodiment described above in accordance with Figure 10, it is easy to prepare a pivoting nozzle element which operates according to the external mixing principle. The external mixing principle offers the advantage over the internal mixing principle that, because the working medium is atomized outside opening *380f*, it is nearly if not completely impossible for outlet *380f* to become clogged.

Nozzle element *380d*, furthermore, is distinguished by the small amount of noise which it produces. The reason for this is that, in order to atomize a given amount of working medium by the external mixing principle, a smaller air pressure value is sufficient to reach specified atomization properties than in atomization by the internal mixing principle. According to the internal mixing principle, a mixing chamber must be provided, from which the compressed air emerges at high velocity to atomize the working medium to a sufficient extent and to preserve these atomization properties until after the mist has emerged from the nozzle element. In contrast, the working medium under the external mixing principle is not atomized until after it has emerged from the nozzle orifice, for which purpose a lower velocity is sufficient because of the more intense turbulence of the compressed air at this outlet. Furthermore, because there it no need to overcome any dynamic pressure, the nozzle elements can be designed with larger open cross sections for the passage of the compressed air. Therefore, for a given air throughput, a much lower air pressure value is required to achieve the same quality of atomization, which has a favorable effect on the generation of noise. The use of a deflector wall intensifies the turbulence of the compressed air also, so that, for a given set of atomization properties, the work can be accomplished at an even lower flow velocity and, therefore, at an even lower air pressure, which leads to a further reduction in the amount of noise generated.

The reason for this is that, in a nozzle element operating according to the external mixing principle, here is no need to provide a mixing chamber, and it is therefore possible to accomplish the work with larger open cross sections and correspondingly lower velocities while achieving the same air throughput.

In the case of nozzle element *380d'* shown in Figure 11, tube *378'* projects slightly beyond outlet *380f'*. Otherwise, nozzle element *380d'* is designed in exactly the same way as nozzle element *380d*.

Because of the different way in which the orifice *378a*, *378a'* of tube *378*, *378'* is positioned relative to outlet *380f*, *380f'* of nozzle element *380d*, *380d'*, the pattern of the spray produced by spray element *380d'* is changed. Starting from the arrangement shown in Figure 10, with which a spread angle $\alpha$ of the spray mist is obtained, spray angle $\alpha'$ of the spray mist decreases progressively the farther tube *378'* projects from central bore *389'* of nozzle element *380d'*.

In addition to the advantages already discussed on the basis of Figure 10, the additional advantage is therefore obtained that the spray pattern of the spray element can be adjusted freely.

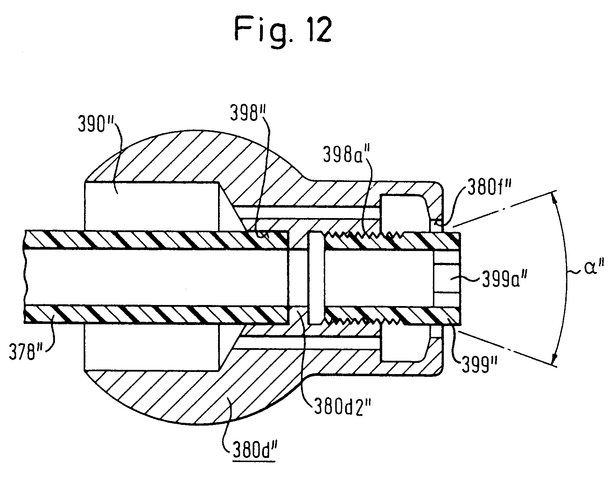

Yet another embodiment of the nozzle element is shown in Figure 12. In this embodiment, central bore *398"* is divided by a ring-shaped flange *380d2"*; tube *378"* rests against the side of this flange which faces recess *390"*. On the outlet side, central opening *398"* is designed with an internal thread *398a"*, into which another tube *399"* provided with an external thread is screwed. So that tube *399"* can be turned, it can be designed, for example, with an internal hexagonal section *399a"*. Additional tube *399"* can be secured against rotating by a stud screw (not shown), for example, in nozzle element *380d"*.

Under consideration of the preceding discussion of Figures 10 and 11, it is easy to see that, by turning additional tube *399"* relative to nozzle element *380d"*, the spread angle $\alpha"$ of the spray mist can be easily changed as desired.

Although, in the embodiments described above, ring-shaped spaces *66a*, *66b*, *166a*, *166b*, *266a*, *266b*, *366a*, and *366b* connected to transverse bores *66h*, *66i*, *166h*, *166i*, *266h*, *266i*, *366h*, and *366i* as well as ring-shaped spaces *366m*, *366n* are provided and described as being on the outside peripheral surface of the valve seat element, it is also possible in principle to provide these ring-shaped spaces on the inside peripheral surface of the valve body.

Under another aspect, the invention pertains to a process for the application of a liquid die wall treatment agent to areas of the die walls of a molding device by means of at least one spray element, the flow rate of the die wall treatment agent being metered by means of a metering valve, which influences an effective metering cross section for the liquid die wall treatment agent and which can itself be influenced by a secondary fluid.

A process such as this is known from DE 36 44 184 A1 In these spray elements, control air acts in the opening direction on the valve body of the metering valve, which is designed as a needle valve, and thus moves the valve body against the action of a helical compression spring, which pretensions the valve body in the closing direction, until the valve body comes to rest against a stop. The die wall treatment agent acts on the valve needle in the radial direction and thus exerts no force on it in either the opening or the closing direction. The effective metering cross section of the metering valve, which can be moved only between a completely closed and a completely open position, is adjusted and kept constant during the spray process by means of a metering screw, which serves to adjust the position of the stop.

But it is also important to remember that individual areas of dies require different amounts of die wall treatment agent to ensure that the molded article acquires the optimum surface properties. For example, when a casting die is sprayed with lubricant or parting agent, a larger amount of lubricant is required in the area of depressions than in the area of flat wall sections of the die, because, in the former case, the surfaces extending around the depression mean that the surface area to be sprayed is larger.

It is easy to see that, if the die is not sprayed with a sufficient amount of lubricant, it is possible, for example, for the casting to become welded at certain points to the die. But spraying the inside of the die with too much lubricant also impairs the quality of the finished casting. It is sufficient here merely to point out that a lubricant consists of lubricating substances contained in a carrier liquid in a manner similar to that known from lacquers, in which the actual dye is present in a solvent . When the lubricant now strikes the wall of the die, the carrier liquid evaporates, and the lubricating substances precipitate onto the wall of the die. If too much lubricant is sprayed onto a certain area of the die wall, the lubricant will run, and therefore the lubricating substances will also run off downward under the effect of gravity and thus fail to cover the die wall sufficiently with lubricant.

In the known die spray systems, the effective metering cross section of the metering valve is set to a compromise value, which takes into account both the areas of the die wall with a low requirement for die wall treatment agent and the areas of the die wall with a high requirement for die wall treatment agent. The possibility of adjusting the effective cross section to a very low value and to cover the areas requiring larger amounts of die wall treatment agent by spraying them more than once can be considered only in the case of products with very high quality specifications because of the extra time required for such a process in practice and the resulting loss of productivity.

Against this background, it is the task of the invention to provide a process for the application of a liquid die wall treatment agent to areas of the die walls of a molding device, that is, a process which makes it possible, in a single spray pass, to dispense quickly the amount of die wall treatment agent that will satisfy the individual requirements.

This task is accomplished in accordance with the invention in that:

(a) a metering valve with a valve membrane of variable shape, the membrane being kept essentially free of guidance friction, is used;
(b) one side of the valve membrane is acted on by the die wall treatment agent, while the other side is acted on by the secondary fluid;
(c) the pressure on at least one side of the membrane is influenced by flow rate-adjusting means, which, under certain reproducible settings, result in flow rates which are reproducibly correlated to these settings; and
(d) the different flow rates are determined by the different floating states of the membrane.

The preferred secondary fluid is air, because it is easy to manage and is available at low cost. In the following, the process according to the invention is therefore always discussed under the assumption that air is being used as the secondary fluid.

In the process according to the invention, the effective metering cross section of the metering valve is adjusted through the play of forces of two pressures, which act on the valve membrane in opposite directions, i.e., the opening direction and the closing direction. As a result, defined force relationships can be established at the membrane, and these relationships keep the membrane in defined floating states. As a result, it is possible to achieve reproducible and infinitely variable settings for any desired flow rate between a completely open and a completely closed state of the metering valve. As a result of the use of a membrane which is essentially free of guidance friction, the process according to the invention is characterized in that the metering valve responds very quickly to a desired change in the flow rate.

As the secondary fluid, a control fluid is used which is not mixed with the die treatment liquid.

It is possible to keep the pressure of the die wall treatment agent constant and to vary the pressure of the secondary fluid by acting on the flow rate-adjusting means. This has the advantage that the amount of die wall treatment agent allowed to pass through the metering valve can be varied over a wider range.

It is also possible, however, to keep the pressure of the secondary fluid constant and to vary the pressure of the die wall treatment agent by acting on the flow rate-adjusting means. When air is used as the secondary fluid, it is possible in this case to omit a separate air feed line and to use atmospheric pressure as the secondary fluid pressure.

If the pressure of the die wall treatment agent is adjusted in accordance with the results of monitoring the contact behavior of the die wall treatment agent with the individual areas of the die wall and if the pressure of the secondary fluid is then made to follow the pressure of the die wall treatment agent in correspondence with the individual desired flow rate by adjustment of the flow rate-adjusting means, it is possible not only to control the amount of die wall treatment agent being dispensed but also to vary the properties of the spray jet by varying the pressure of the die wall treatment agent.

As a result, it is possible, for example, to counteract the Leidenfrost effect, which consists in the formation of a vapor blanket on the hot walls of the die when droplets of die wall treatment agent strike the die. Such a blanket prevents the die walls from being wetted by the droplets and thus keeps the die walls from being covered sufficiently with die wall treatment agent. If the pressure of the die wall treatment agent is increased, the kinetic energy of the droplets increases, too, which reduces the tendency for a vapor blanket to form and thus leads to an improvement in the wetting of the die walls. Until now, the only way to counteract the Leidenfrost effect was to increase the degree to which the areas of the die wall in question were cooled. The increase in stress resulting from the use of a "harder" spray jet is an effect far more preferable than the stress on the material caused by the quenching associated with more intensive cooling, which considerably reduces the service life of the die. Beyond this, increasing the pressure of the die wall treatment agent also makes it possible to achieve a further increase in the productivity of the process, inasmuch as the cooling step can be reduced or even completely eliminated.

If the surfaces of the membrane on which the pressures act are essentially constant, the desired flow rates can be set by using the flow rate-adjusting means to adjust the specific pressure difference between the pressure of the die wall treatment agent and the pressure of the secondary fluid.

Because a gaseous atomizing agent is supplied to the die wall treatment liquid downstream from the effective metering cross section in such a way that the pressure downstream from the effective metering cross section is not significantly affected by this atomizing agent, it is possible in a simple manner to ensure that the knowledge of the feed pressure of the die wall treatment agent and of the pressure of the secondary fluid will be sufficient for achieving the reproducible adjustment of the effective metering cross section. This variant of the process is relevant especially when die wall treatment agents and atomizing agents such as blast air are mixed according to the external mixing principle. In a spray element working according to the external mixing principle, defined pressure relationships must always prevail downstream from the metering valve, because any reverse effects of the blast air pressure on the pressure of the die wall treatment agent would interfere with the proper mixing of the blast air and the die wall treatment agent outside the spray element.

It is also possible, however, to supply a gaseous atomizing agent at a variable feed rate to the die wall treatment liquid downstream from the effective metering cross section in such a way that the pressure downstream from the effective metering cross section is affected and to reset the pressure of the die wall treatment agent and/or the pressure of the secondary fluid as a function of the pressure thus affected. This variant of the process is relevant especially in spray elements which operate according to the internal mixing principle, in which the mixing of die wall treatment agent and blast air occurs in a mixing chamber. It is advantageous, therefore, for the pressure affected in this way to be monitored in this mixing chamber of the spray element.

Through the use of a metering valve with a tubular membrane, which is acted on from one side, preferably the inside, by the die wall treatment liquid and on the other side by the secondary fluid and which, together with a ring-shaped contact surface, defines the effective metering cross section, it is possible to make large actuation surfaces available to the die wall treatment agent and to the secondary fluid. As a result, the influence of forces such as an additional closing force originating from the elasticity of the membrane or from its internal pretension, the magnitudes of such forces remaining essentially constant, can be decreased in comparison with the compressive force to which they are added. This makes it possible to achieve more precise control of the resulting compressive forces and thus an extremely sensitive adjustment of the effective metering cross section.

The precise adjustability of the effective metering cross section can be improved even more by the use of a metering valve with pressure actuation surfaces, i.e., the surfaces exposed to the pressure of the die wall treatment liquid and to the pressure of the secondary fluid, which are essentially independent of the shape of the membrane as it varies during operation.

Preferably, the invention pertains to a process for the application of a liquid die wall treatment agent to areas of the walls of a die of a molding device by means of at least one spray element, the flow rate of the die wall treatment agent being metered by a metering valve, which influences an effective metering cross section for the liquid die wall treatment agent, where, during a spray process, the spray element is moved relative to the molding device along a predetermined path, and where the effective metering cross section is specified in advance as a function of each position of the spray element on the path and is positively adjusted for the position in question as the path is traversed.

This process is characterized in that the amount of die wall treatment agent required to produce a casting with optimum properties can be supplied precisely to each die wall area of the molding device, regardless of the topography of the die walls, because, through the movement of the spray element relative to the molding device, it is possible to approach end to spray even undercut areas of the die wall with precision.

Preferably, the invention pertains to a process for the application of a liquid die wall treatment agent to die wall areas of a molding device by means of at least one spray element, in which, during the spray process, the spray element is moved along a predetermined path relative to the molding device, where the amount of liquid die wall treatment agent dispensed per unit time by the spray element is specified in advance as a function of each position of the spray element on the path and is positively adjusted for the position in question as the path is traversed.

This process can also take into precise account any topography of the die which may occur. Furthermore, simple open-and-close valves, i.e., valves which have a constant flow rate in the open state, can be used in this process. The flow rate is varied in this case by changing the cycle ratio, i.e., the ratio between the period of time during which the die wall treatment agent is ejected and the total time. It is obvious that the duration of the individual valve opening intervals must be short enough - the exact value being a function of the speed at which the spray tool moves along the path - to produce a quasi-continuous spray jet.

When the speed along the path is variable, the quantity of liquid die wall treatment agent dispensed is preferably determined under consideration of the speed and/or under consideration of operating parameters such as the local die temperatures, which can be accessed by appropriate sensor devices. It is easy to see that the quantity of liquid die wall treatment agent dispensed at a certain position along the path per unit time is proportional as a first approximation to the path speed selected in the particular case. The faster the tool travels along the path, the larger the amount of die wall treatment agent which must be dispensed per unit time. In a more precise equation, it will also be necessary to include a certain lead time, which takes into account the time it takes for the droplets to travel to the wall and the components of motion imparted to them by the motion of the spray element along the path.

The process is explained in greater detail below on the basis of several process variants and with reference to the attached drawing:

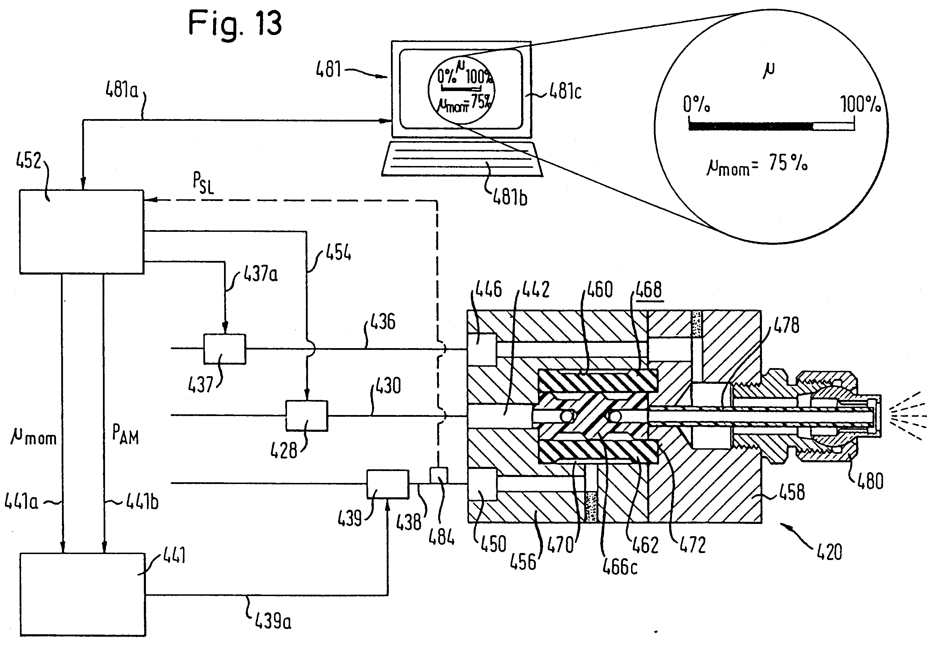

- Figure 13 is a schematic diagram of a switching device for the operation of a spray element operating according to the external mixing principle according to a first process variant;

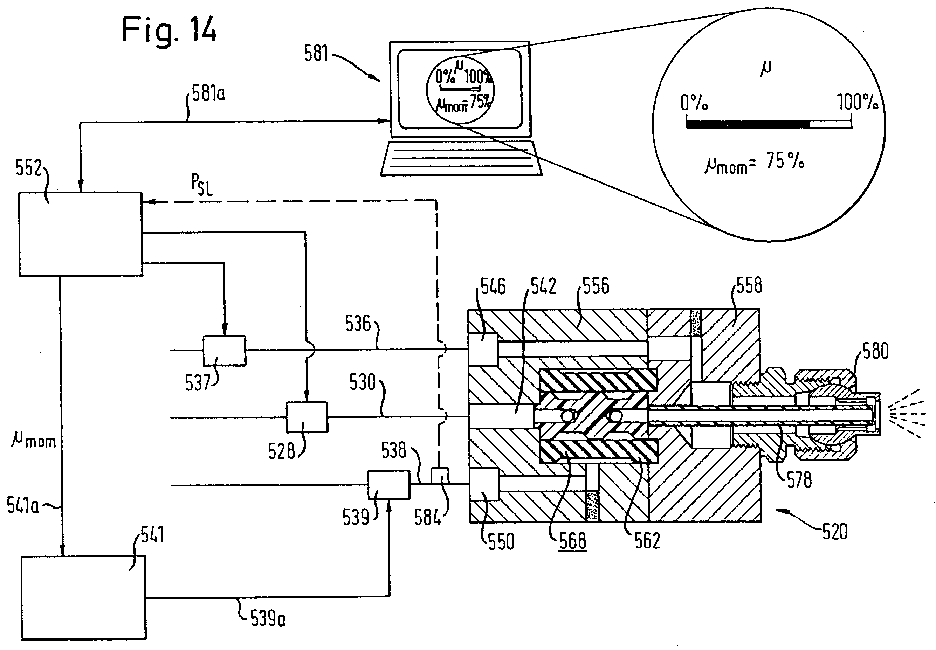

- Figure 14 is a schematic diagram of a switching device for the operating of a spray element operating according to the external mixing principle according to a second process variant;

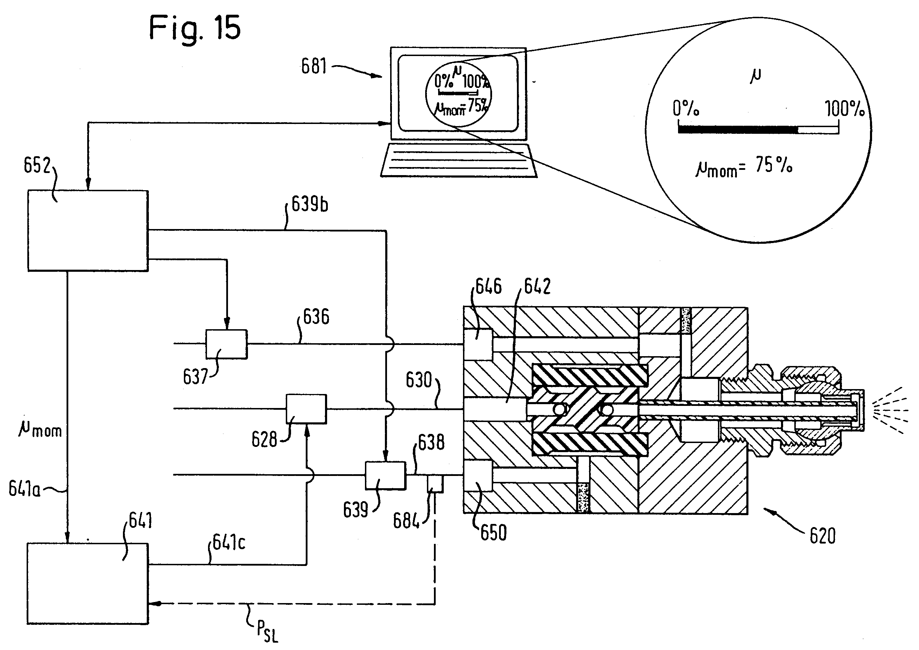

- Figure 15 is a schematic diagram of a switching device for the operation of a spray element operating according to the external mixing principle according to a third process variant;

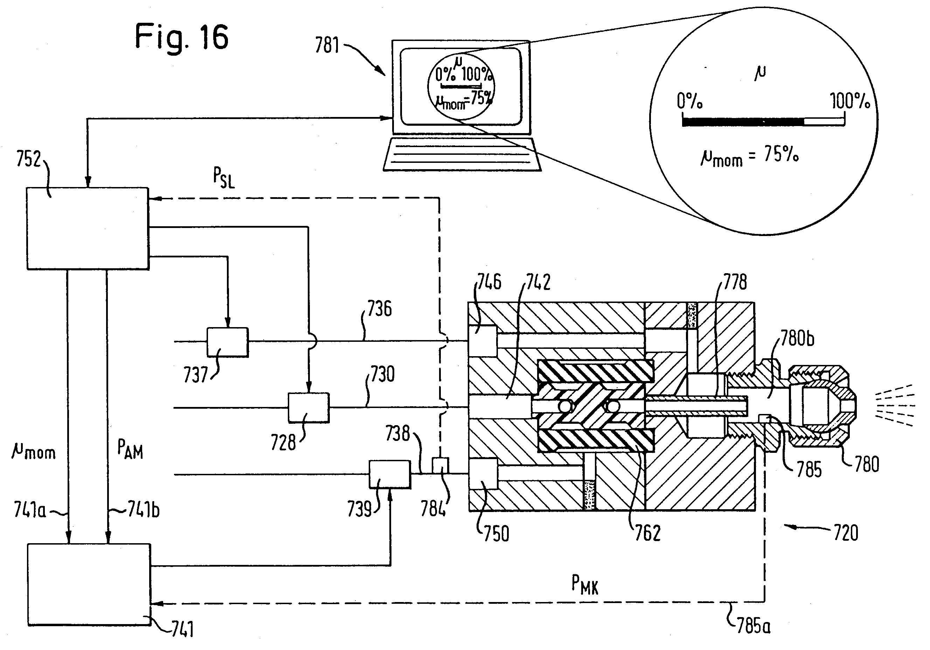

- Figure 16 is a schematic diagram of a switching device for the operation of a spray element operating according to the internal mixing principle according to another process variant.

The process is described in the following with reference to a spray element 20, which forms part of a die sprayer 10, as was described in detail above with reference to Figure 1. Die sprayer 10 comprises, according to Figure 1, an X-travel unit 14, a Y-travel unit 16, and a Z-travel unit 11, this last unit serving to shift spray tool 18 in the direction essentially perpendicular to the plane of the drawing.

Die sprayer 10 serves, as also described above, to prepare the parts 12a, 12b of die 12 for the next work cycle, the die being used in the production of components by means of a die-casting process, e.g., the aluminum die-casting process. For this purpose, after die 12 has been opened and the finished component has been removed, spray tool 18 is moved by means of XYZ travel units 14, 16, 11 into die 12, where it is carried along a path C (shown by the dash-dot line in Figure 1), during which die 12 is cleaned of metal residues, lubricant residues, and the like by means of, for example, blast air; cooled by spraying with water; spray-coated with lubricant; and possibly dried with blast air.

As is easy to see, the individual parts of the die require different treatments during preparation for the next casting cycle in order to achieve a molded article with optimum surface properties. In particular the individual areas require different amounts of lubricant. For example, when a die-casting mold is spray-coated with lubricant, a larger amount of lubricant is required in, for example, the area of depressions 12c, like those present in die part 12b on the left in Figure 1, than is required in the area of flat sections of the die wall.

If die 12 is not covered by a sufficient quantity of lubricant, it is possible for the casting to become welded locally to die 12. But the spray-coating of die 12 with an insufficient amount of lubricant is not the only way in which the die walls can end up with an insufficient coating of lubricant; on the contrary, spraying the die with too much lubricant can also lead to this effect. Lubricants usually consist of lubricating substances dispersed in a carrier liquid, as is also the case with lacquers, for example, in which the dye is present in a solvent. When a droplet of lubricant strikes die 12, the carrier liquid evaporates, and the dispersed lubricating substances remain on the wall of the die. If the die is sprayed with too much lubricant, the lubricant runs off in the downward direction under the effect of gravity, leaving the die walls without a sufficient coating of lubricant.

According to what has been said above, it is therefore desirable for the individual areas of the die walls to receive individual treatment to the greatest possible extent in order that a molded article which meets even the highest quality specifications can be produced. For this purpose, a die sprayer 10 is used, with a spray tool 18 which has a plurality of spray elements 20.

Spray elements 20, as discussed above in reference to Figure 2, can be divided into a plurality of control circuits. According to Figure 2, all control circuits S1, S2, and S3 are fed from a single main lubricant line 30, and the individual control is accomplished by way of separate control air feed lines 38, which connect spray element planes 18d (indicated only in broken line in Figure 2), arranged in sequence in the direction perpendicular to the plane of the drawing according to Figure 2. It is also possible, of course, to provide separate feed lines for control air, for blast air, and for lubricant for each control circuit. In addition, each spray element 20 can form its own separate control circuit and be supplied separately with control air, blast air, and lubricant.

By driving the individual control circuits as a function of the XYZ-position reached by means of coordinate travel units 14, 16, 11 along path C, each section of the wall of die 12 can be sprayed in the desired manner with working medium, etc. By the use of the spray elements shown in Figures 3-12 and the process which will be described below on the basis of Figures 13-16 with several process variants as examples, the amount of lubricant supplied to each individual section of the wall of die 12 can be metered and apportioned in an essentially infinitely variable manner. The desired amount of lubricant to be dispensed per unit time by the individual spray elements for each set of coordinates of XYZ travel units 14, 16, 11 can be preset as a function of other operating parameters, such as the speed of the XYZ travel units, the flare angle $\alpha$ of the spray jet (see, for example, Figures 10-12), or the like. A more detailed discussion of the manner in which these values are predetermined will be presented further below.

Figure 13 shows a circuit design for the operation of a spray element working according to the external mixing principle according to a first variant of the process, where analogous parts are provided with the same reference numbers as in Figures 1-3, except that they are raised by the number 400.

Spray element 420 operates according to the external mixing principle, which has been explained in detail above with reference to the embodiment according to Figure 6. The design `of metering valve 462 corresponds to that of metering valve 62 of the embodiment according to Figure 3, but, in contrast to that valve, it is acted on in the opening direction by the pressure of the lubricant being fed to it through line 442 and in the closing direction by the control air pressure being supplied to control chamber 470 through line 450. A flexible section of tubing 478 leads from metering valve 462 to nozzle assembly 480, which works according to the external mixing principle.

It is important to remember that the outside diameter of valve body 468 is essentially the same as the inside diameter of recess 460. The length of valve body 468, however, is slightly greater than the sum of the depths of recess 460 and ring-shaped groove 472, so that, when the two housing parts 456 and 458 are assembled, valve body 468 comes to rest against the boundary walls of recess 460 and simultaneously serves as an upstream and downstream seal to prevent the undesirable escape of working medium. This obviously applies also to the embodiments described above.

Feed line 438 for control air connected to control line 450 is provided with a proportional valve 439, by means of which a control unit 441 is able to influence the control air pressure acting from control chamber 470 on the valve body. Control unit 441 is connected for this purpose to the proportional valve by way of a control line 439a. In a similar way, a valve unit 428, influencing the pressure of the working medium in feed lines 430 and 442, and a proportional valve 437, influencing the pressure of the blast air in feed lines 436 and 446, is connected by way of control lines 454 and 437a, respectively, to an additional control unit 452. The design of valve unit 428 is preferably the same as that of valve unit 28 shown in Figure 2, so that spray element 420 can be used to spray different working media, e.g., lubricant and water in the simplest case, either separately or mixed. Furthermore, valve unit 428 also makes it possible to vary the pressure $P_{AM}$ of the working medium.

During the preparation of casting die 12 (see Figure 1) for the next work cycle, spray tool 18 is carried by means of XYZ travel units 14, 16, 11 inside die 12 under the control of a computer program being run on a computer system 481. Inside the die, the tool is moved along path $C = f(X, Y, Z)$ in such way that die 12 is completely spray-coated with lubricant. For each set of coordinates (XYZ), comprising an X-position value, a Y-position value, and a Z-position value for spray tool 18, computer system 481 transmits the operating parameter values required for each spray element 420 to control unit 452 via a data line 481a. These operating parameter values are in particular the composition and the pressure $P_{AM}$ of the working medium to be sprayed, the pressure $P_{BL}$ of the blast air, and the desired amount of lubricant to be dispensed $\mu_{mom}$.

The kinetic energy of the sprayed droplets can be varied by way of the absolute pressure $P_{AM}$ of the working medium. In the area of especially hot die wall regions, on which the Leidenfrost effect is especially pronounced, the vapor blanket hindering the wetting of the die wall can be reliably broken through by the use of a higher working medium pressure, so that the desired amount of lubricant can be deposited on the die wall. The setting corresponding to the desired value of pressure $P_{AM}$ of the working medium is transmitted to valve 428 by way of line 454. The setting corresponding to the desired blast air pressure $P_{BL}$ is transmitted to valve 437 in a similar manner.

Control unit 452, furthermore, transmits the desired amount of lubricant to be dispensed $\mu_{mom}$ and the desired pressure $P_{AM}$ of the working medium by way of two control lines 441a, 441b to control unit 441 to set the effective cross section of metering valve 462. Control unit 441 derives a corresponding control command from these parameters and transmits it to valve 439.

In the case of a metering valve such as metering valve 462 shown in Figure 13, for example, which, when membrane 468 has been lifted up from valve seat 466c, presents essentially constant and equal actuation surfaces to pressure $P_{AM}$ of the working medium and pressure $P_{SL}$ of the control air, the effective metering cross section can be adjusted by influencing the difference $P_{AM}$ - $P_{SL}$ between these two pressures. If, for example, it is necessary for the pressure $P_{AM}$ of the working medium to be higher by a value of $P_0$ at a certain position $X_0$, $Y_0$, $Z_0$ on path C, the essentially equal effective cross section $\Phi(X_0,Y_0,Z_0)$ can be obtained by also increasing the control air pressure $P_{SL}$ by the amount $P_0$. Because the amount of working medium dispensed per unit time undergoes hardly any change as a function of the pressure $P_{AM}$ of the working medium, the working medium flow race remains essentially constant.

In the determination of the control command to be issued in each case to proportional valve 439, the influence of forces which remain essentially constant in their order of magnitude, e.g., a closing force originating from the elasticity of the membrane or its internal pretension, will, of course, also be taken into account; and it is also possible to take into consideration the dependence, at a constant effective cross section, of the flow rate on the working medium pressure $P_{AM}$ which, although weak, does in fact exist.

Feed line 438 for control air is, furthermore, provided with a pressure sensor 484, which measures the value of pressure $P_{SL}$ prevailing in this feed line and transmits it to control unit 452. When pressure monitor 484 detects an unintended drop in the control air pressure, control unit 452 issues a closing command to valve unit 428 and possibly also to proportional valve 437, so that no more working medium and possibly also no more blast air can be supplied through feed lines 430 and 442, and/or 436 and 446 respectively.

In this context it is well to remember that the internal pretension of valve membrane 468 in the direction of the closed position is not really required to achieve the above-described control of the discharge of working medium; however, it is advantageous with respect to the fail-safe function, also described above, during a drop in the control air pressure, because membrane 468 in this case keeps valve 462 closed after the shutoff of the supply of working medium and prevents the working medium from continuing to drip.

As already mentioned above, the parameters required to achieve the desired spray behavior of spray tool 18, namely, pressure $P_{AM}$ of the working medium to be sprayed, pressure $P_{BL}$ of the blast air, and the desired amount of lubricant to be dispensed $\mu_{mom}$, are stored for each of spray elements 20 of spray tool 18 and for each position (X,Y,Z) of path C in computer system 481.

All of these parameter values can be revised interactively by an operator with the help of computer system 481. That is, during the course of the operation of molding device 12, it may prove necessary to adapt some of the parameters to circumstances which may have changed. The operator can, for example, recognize directly from the observation of spray-coated die 12 and from an inspection of the finished molded article whether too much or too little working medium has been sprayed onto a certain part of die 12. Namely, if too much working medium has been sprayed on, it runs down walls 12a, 12b of die 12, as already mentioned above, and if too little working medium is sprayed on, drawing or welding points are formed on the molded article. Furthermore, die 12 can have too high a temperature at certain points, which, as a result of the Leidenfrost effect, prevent the proper coverage of the die walls with lubricant. It is also possible to provide sensors to monitor the temperature of the die walls (e. g., sensor 59 in Figure 1).

If the operator has recognized that it is necessary to apply more or less working medium to a certain point on the die wall, the first step is to enter this position into computer system 481 by way of keyboard 481b. Nowadays, such inputs are usually accomplished by way of menus; for example, a computer mouse is used to identify the point in question on a graphic display of die 12 shown on monitor 481c and then confirmed by clicking the button. Then the operator issues the command via keyboard 481b to apply more or less working medium to this point. This command can be purely qualitative, but it can also contain quantitative data on the desired change. According to a program previously loaded into it, computer system 481 then determines, from these inputs, the positions (X,Y,Z) on path C at which the amount of working medium to be sprayed per unit time must be changed and which spray elements 20 will be doing the spraying. Inputs to change the kinetic energy of the droplets are made in the same way. In the next molding cycle, the operator will check to see whether the inputs brought about the desired result and will adjust the inputs if necessary until the finished molded article has the desired quality.

The operator can also call up the current settings for any point on path C and any spray element 20. It is advantageous for the amount of working medium dispensed per unit time $\mu_{mom}$ to be displayed to the operator as a fraction of the maximum amount of working medium which can be dispensed, that is, the amount dispensed when the switching valve is all the way open. This display can be given in both analog (bar graph) and digital formats, as shown in the large circle in Figure 13, giving a detailed view of the display of monitor 481c. In the example given, 75% of the maximum sprayable amount of working medium is dispensed at the specific point on the path in question (not indicated in itself).

Figure 14 shows a circuit design for the operation of a spray element operating according to the external mixing principle according to another variant of the process. Analogous parts are again provided with the same reference numbers as those in Figure 1-3, except that they are raised by the number 500.

The circuit design according to Figure 14 differs from that according to Figure 13 only in that control unit 552 does not transmit the value of pressure $P_{AM}$ of the working medium to additional control unit 541, although it does transmit the desired value of the amount of working medium to be dispensed per unit time $\mu_{mom}$. The circuit design according to Figure 14 is suitable, therefore, for an operation in which the value $P_{AM}$ of the pressure of the working medium is kept constant during operation and the amount dispensed per unit time $\mu_{mom}$ is controlled merely by influencing the control air pressure $P_{SL}$.

Otherwise, the circuit design according to Figure 14 and also spray element 520 are identical to those shown in Figure 13 in terms of design and function. In this regard, therefore, reference is made to the description of Figure 13 presented above. In particular, what was said concerning the interactive revision of the operating parameter values by the operator and concerning the design of valve 562 also applies to the embodiment according to Figure 14.

In principle, it is also possible to keep the control air pressure $P_{SL,}$ constant and to vary the working medium pressure $P_{AM}$. A circuit design realizing this possibility is shown in Figure 15, where, again, analogous parts are provided with the same reference numbers as in Figures 1-3, except that they are raised by the number 600.

The circuit design according to Figure 15 differs from that according to Figure 14 only in the following points: control unit 652 is connected by way of a control line 639b to proportional valve 639 and serves to keep control air pressure $P_{SL}$ constant. Control unit 641, however, is connected by a control line 641c to valve unit 628 and influences pressure $P_{AM}$ of the working medium in such a way that spray element 620 dispenses the desired amount $\mu_{mom}$ of working medium per unit time. Finally, pressure monitor 684 is connected to control unit 641, so that it can issue a stop command in the event of a drop in the control air pressure at valve unit 628.

Otherwise, the circuit design according to Figure 15 is the same as the embodiment according to Figure 14, including the design of spray element 620. Reference is therefore made to the description of that figure.

Figure 16 shows a circuit design for the operation of a spray element according to another variant of the process, where similar parts are again provided with the same reference numbers as in Figure 1-3, except that they are now raised by the number 700.

The circuit design according to Figure 16 differs from that of Figure 13 only in the following points: spray element 720 works according to the internal mixing principle; that is, the working medium supplied through valve unit 728 and feed lines 730, 742 and metered through valve 762 is atomized in a mixing chamber 780b by the blast air supplied by way of proportional valve 737 and feed lines 736, 746 and then blown out through nozzle assembly 780. Pressure $P_{MK}$ building up in mixing chamber 780b acts backwards by way of section of tubing 778 on metering valve 762 and changes the pressure relationships present on the downstream side of this valve. Because it can be quite desirable to change the throughput and thus the pressure of the blast air as well, a parameter reflecting these downstream pressure conditions must therefore be monitored also and taken in account in the determination of the control air pressure $P_{SL}$ for adjusting the desired amount of lubricant dispensed per unit time. For this purpose, a pressure sensor 785 is provided in mixing chamber 780b; this sensor is connected by way of a signal line 785a to control unit 741, which, under consideration of the predetermined desired amount of lubricant $\mu_{mom}$ (transmitted beforehand via line 741a), the predetermined pressure $P_{AM}$ of the working medium (transmitted beforehand via line 741b), and the measured pressure $P_{MK}$ prevailing in mixing chamber 780b, derives a control command for proportional valve 739.

Otherwise, the circuit design according to Figure 16 is identical to that shown in Figure 13 in terms of design and function. In this regard, therefore, reference is made to the description of Figure 13 presented above. In particular, what was said concerning the interactive revision of the operating parameter values by the operator and concerning the design of valve 762 also applies to the embodiment according to Figure 16.

## Claims

1. Process for the application of a liquid die wall treatment agent to areas of the die walls (12a, 12b) of a molding device (12) by means of at least one spray element (20) with metering of the flow rate of the die wall treatment agent by a metering valve (62), which influences an effective metering cross section for the liquid die wall treatment agent and which can be influenced by a secondary fluid, characterized by the features

   (a) a metering valve (62) with a valve membrane (68) of variable shape, kept essentially free of guide friction, is used;
   (b) one side of the valve membrane (68) is acted on by the die wall treatment agent, while the other side is acted on by the secondary fluid;
   (c) the pressure on at least one side of the membrane (68) is influenced by flow rate-adjusting means (452, 441, 428, 439), which, under certain reproducible settings, result in flow rates reproducibly coordinated to these settings; and

(d) the different flow rates are determined by different floating states of the membrane (*68*).

2. Process according to Claim 1, characterized in that, as the secondary fluid, a control fluid is used which is not mixed with the die wall treatment agent.

3. Process according to one of Claims 1 and 2, characterized in that the pressure of the die wall treatment agent is kept constant, and the pressure of the secondary fluid is varied by acting on the flow rate adjusting means (*452, 441, 428, 439*).

4. Process according to Claim 1 or Claim 2, characterized in that the pressure of the secondary fluid is kept constant, and the pressure of the die wall treatment agent is varied by acting on the flow rate-adjusting means (*452, 441, 428, 439*).

5. Process according to one of Claims 1-4, characterized in that the pressure of the die wall treatment agent is adjusted according to the results of monitoring the contact behavior of the die wall treatment agent with the individual die wall areas (*12a, 12b*), and in that, by adjustment of the flow rate-adjusting means (*452, 441, 428, 439*), the pressure of the secondary fluid is made to follow the pressure of the die wall treatment agent in correspondence with the respective desired flow rate.

6. Process according to Claim 5, characterized in that the respective pressure difference between the pressure of the die wall treatment agent and the secondary fluid is specified by the flow rate adjusting means (*452, 441, 428, 439*).

7. Process according to one of Claims 1-6, characterized in that a gaseous atomizing agent is fed to the die wall treatment liquid downstream from the effective metering cross section (at *380f*) in such a way that the pressure downstream from the effective metering cross section is not significantly influenced by this atomizing agent.

8. Process according to Claim 1, characterized in that a gaseous atomizing agent is fed at a variable feed rate to the die wall treatment liquid downstream from the effective metering cross section (at *80b*) in such a way that the pressure downstream from the effective metering cross section is influenced, and in that the pressure of the die wall treatment agent and/or the pressure of the secondary fluid is made to follow in accordance with the pressure thus influenced.

9. Process according to Claim 8, characterized in that the pressure thus influenced is monitored in a mixing chamber (*480b*) of the spray element.

10. Process according to one of Claims 1-9, characterized by the use of a metering valve (*62*) with a tubular membrane, one side of which preferably the inside, is acted on by the die wall treatment liquid, while the other side is acted on by the secondary fluid and which, together with a ring-shaped contact surface (*66c*), defines the effective metering cross section.

11. Process according to one of Claims 1-10, **characterized** by the use of a metering valve (*62*), the pressure-responsive sides of which, i.e., the sides exposed to the pressure of the die wall treatment liquid and to the pressure of the secondary fluid, are essentially independent of the shape of the membrane as it changes during operation.

12. Process, according to one of Claims 1-11, characterized in that, during a spray process, the spray element (*20*) is moved relative to the molding device (*12*) along a predetermined path, and in that the effective metering cross section is specified as a function of each individual (XYZ) position on the path and, as the path is traversed, positively adjusted for each individual (XYZ) position.

13. Process, according to one of Claims 1-12, characterized in that, during a spray process, the spray element (*20*) is moved relative to the molding device (*12*) along a predetermined path, and in that the amount of liquid die wall treatment agent dispensed per unit time by the spray element (*20*) is specified as a function of the individual (XYZ) position on the path and, as the path is traversed, positively adjusted for each individual (XYZ) position.

14. Process according to Claim 13, characterized in that, in the case of a variable speed along the path, the amount of liquid die wall treatment agent dispensed per unit time is determined under consideration of the speed along the path and/or under consideration of operating parameters such as the local die temperature, which can be accessed through appropriate sensor devices.

**Patentansprüche**

1. Verfahren zum Aufbringen eines flüssigen Formwandbehandlungsmittels auf Formwandbereiche (12a, 12b) einer Formgebungseinrichtung (12) mit Hilfe mindestens eines Sprühelements (20) unter Dosierung der Durchflußrate des Formwandbehandlungsmittels durch ein Dosierventil (62), welches einen Durchflußdosierquerschnitt für das flüssige Formwandbehandlungsmittel beeinflußt und durch ein Sekundärfluid beeinflußbar ist, gekennzeichnet durch die Merkmale

    a) es wird ein Dosierventil (62) mit einer von Führungsreibung im wesentlichen frei gehaltenen formvariablen Ventilmembran (68) verwendet;
    b) die Ventilmembran (68) wird auf einer Seite von dem Formwandbehandlungsmittel und auf der anderen Seite von dem Sekundärfluid beaufschlagt;
    c) der Druck auf mindestens einer Seite der Membran (68) wird durch Durchflußrateneinstellmittel (452, 441, 428, 439) beeinflußt, welche bei bestimmten reproduzierbaren Einstellungen diesen reproduzierbar zugeordnete Durchflußraten ergeben;
    d) die unterschiedlichen Durchflußraten werden durch unterschiedliche Schwebezustände der Membran (68) bestimmt.

2. Verfahren nach Anspruch 1, dadurch gekennzeichnet, daß als Sekundärfluid ein Steuerfluid verwendet wird, welches mit der Formwandbehandlungsflüssigkeit nicht vermischt wird.

3. Verfahren nach einem der Ansprüche 1 und 2, dadurch gekennzeichnet, daß der Druck des Formwandbehandlungsmittels konstant gehalten und der Druck des Sekundärfluids durch Einwirkung auf die Durcnflußrateneinstellmittel (452, 441, 428, 439) variiert wird.

4. Verfahren nach Anspruch 1 oder 2, dadurch gekennzeichnet, daß der Druck des Sekundärfluids konstant gehalten und der Druck des Formwandbehandlungsmittels durch Einwirkung auf die Durchflußrateneinstellmittel (452, 441, 428, 439) variiert wird.

5. Verfahren nach einem der Ansprüche 1 bis 4, dadurch gekennzeichnet, daß der Druck des Formwandbehandlungsmittels nach Maßgabe der Ergebnisse der Überwachung des Kontaktverhaltens des Formwandbehandlungsmittels an den jeweiligen Formwandbereichen (12a, 12b) eingestellt wird und daß durch Einstellung der Durchflußrateneinstellmittel (452, 441, 428, 439) der Druck des Sekundärfluids entsprechend der jeweils gewünschten Durchflußrate dem Druck des Formwandbehandlungsmittels nachgeführt wird.

6. Verfahren nach Anspruch 5, dadurch gekennzeichnet, daß mit Hilfe der Durchflußrateneinstellmittel (452, 441, 428, 439) die jeweilige Druckdifferenz zwischen dem Druck des Formwandbehandlungsmittels und des Sekundärfluids vorgegeben wird.

7. Verfahren nach einem der Ansprüche 1 bis 6, dadurch gekennzeichnet, daß der Formwandbehandlungsflüssigkeit ein gasförmiges Zerstäubermittel stromabwärts des Durchflußdosierquerschnitts (bei 380f) derart zugeführt wird, daß durch dieses Zerstäubermittel der Druck stromabwärts des Durchflußdosierquerschnitts nicht wesentlich beeinflußt wird.

8. Verfahren nach Anspruch 1, dadurch gekennzeichnet, daß der Formwandbehandlungsflüssigkeit ein gasförmiges Zerstäubermittel mit variabler Zuflußrate stromabwärts des Durchflußdosierquerschnitts (bei 80b) derart zugeführt wird, daß der Druck stromabwärts des Durchflußdosierquerschnitts beeinflußt wird, und daß der Druck des Formwandbehandlungsmittels und/oder der Druck des Sekundärfluids nach Maßgabe des so beeinflußten Drucks nachgeführt wird.

9. Verfahren nach Anspruch 8, dadurch gekennzeichnet, daß der so beeinflußte Druck in einer Mischkammer (480b) des Sprühelements überwacht wird.

10. Verfahren nach einem der Ansprüche 1 bis 9, gekennzeichnet durch die Verwendung eines Dosierventils (62) mit einer Schlauchmembran, welche auf einer Seite, vorzugsweise der Innenseite, von der Formwandbehandlungsflüssigkeit und auf der anderen Seite von dem Sekundärfluid beaufschlagt wird und zusammen mit einer ringförmigen Anlagefläche (66c) den Durchflußdosierquerschnitt definiert.

11. Verfahren nach einem der Ansprüche 1 bis 10, gekennzeichnet durch die Verwendung eines Dosierventils (62), dessen Druckbeaufschlagungsflächen, d.h. die Flächen, die dem Druck der Formwandbehandlungsflüssigkeit und dem Druck des Sekundärfluids ausgesetzt sind, von der betriebsmäßig veränderlichen Membranform im wesentlichen unabhängig sind.

12. Verfahren nach einem der Ansprüche 1 bis 11, dadurch gekennzeichnet, daß das Sprühelement (20) während eines Sprühvorgangs relativ zu der Formgebungseinrichtung (12) längs einer vorbestimmten Bahn bewegt wird und daß der Durchflußdosierquerschnitt als Funktion der jeweiligen Position (XYZ) auf der Bahn vorgegeben und bei Durchlaufen der Bahn in der jeweiligen Position (XYZ) zwangsläufig eingestellt wird.

13. Verfahren nach einem der Ansprüche 1 bis 12, dadurch gekennzeichnet, daß das Sprühelement (20) während eines Sprühvorgangs relativ zu der Formgebungseinrichtung (12) längs einer vorbestimmten Bahn bewegt wird und daß die von dem Sprühelement (20) pro Zeiteinheit abgegebene Menge des flüssigen Formwandbehandlungsmittels als Funktion der jeweiligen Position (XYZ) auf der Bahn vorgegeben und bei Durchlaufen der Bahn in der jeweiligen Position (XYZ) zwangsläufig eingestellt wird.

14. Verfahren nach Anspruch 13, dadurch gekennzeichnet, daß bei veränderlicher Bahngeschwindigkeit die pro Zeiteinheit abgegebene Menge des flüssigen Formwandbehandlungsmittels unter Berücksichtigung der Bahngeschwindigkeit bestimmt wird und/oder unter Berücksichtigung von Betriebsparametern, wie der lokalen Formtemperatur, die durch entsprechende Sensormittel abfragbar sind.

**Revendications**

1. Procédé d'application d'un agent de traitement liquide pour paroi de moule sur des zones des parois de moule (12a, 12b) d'un dispositif de moulage (12), au moyen d'au moins un élément de pulvérisation (20), avec dosage du débit de l'agent de traitement de paroi de moule par une vanne de dosage (62), qui exerce une influence sur une section transversale effective de dosage pour l'agent de traitement liquide pour paroi de moule et qui peut être influencée par un fluide secondaire,
    caractérisé en ce que

    (a) une vanne de dosage (62), comportant une membrane de vanne (68) de forme variable, maintenue sensiblement libre de friction de guidage, est utilisée ;
    (b) l'agent de traitement de paroi de moule agit sur une face de la membrane de vanne (68), tandis que le fluide secondaire agit sur l'autre face ;
    (c) la pression exercée sur au moins une face de la membrane (68) est influencée par des moyens de réglage de débit (452, 441, 428, 439) qui, selon certains réglages reproductibles, donnent des débits qui sont coordonnés, de façon reproductible, avec ces réglages ; et
    (d) les différents débits sont déterminés par différents états de flottaison de la membrane (68).

2. Procédé selon la revendication 1, caractérisé en ce qu'est utilisé, comme fluide secondaire, un fluide de commande qui n'est pas mélangé avec l'agent de traitement de paroi de moule.

3. Procédé selon l'une des revendications 1 et 2, caractérisé en ce que la pression de l'agent de traitement de paroi de moule est maintenue constante, et la pression du fluide secondaire est modifiée en agissant sur les moyens de réglage du débit (452, 441, 428, 439).

4. Procédé selon la revendication 1 ou la revendication 2, caractérisé en ce que la pression du fluide secondaire est maintenue constante, et la pression de l'agent de traitement de paroi de moule est modifiée en agissant sur les moyens de réglage du débit (452, 441, 428, 439).

5. Procédé selon l'une des revendications 1-4, caractérisé en ce que la pression de l'agent de traitement de paroi de moule est réglée en fonction des résultats de la surveillance du comportement de contact de l'agent de traitement de paroi de moule avec les différentes zones de paroi de moule (12a, 12b), et en ce que, grâce au réglage des moyens de réglage de débit (452, 441, 428, 439), la pression du fluide secondaire est amenée à suivre la pression de l'agent de traitement de paroi de moule de façon correspondante au débit respectif désiré.

6. Procédé selon la revendication 5, caractérisé en ce que la différence de pression respective entre la pression de l'agent de traitement de paroi de moule et le fluide secondaire est déterminée par les moyens de réglage de débit (452, 441, 428, 439).

7. Procédé selon l'une des revendications 1-6, caractérisé en ce qu'un agent de pulvérisation gazeux est introduit dans le liquide de traitement de paroi de moule en aval de la section transversale effective de dosage (en 380f) de telle sorte que la pression qui règne en aval de la section transversale effective de dosage ne soit influencée de façon significative par cet agent de pulvérisation.

8. Procédé selon la revendication 1, caractérisé en ce qu'un agent de pulvérisation gazeux est introduit, selon un débit d'alimentation variable, dans le liquide de traitement de paroi de moule en aval de la section transversale effective de dosage (en 80b) de telle sorte que la pression qui règne en aval de la section transversale effective de dosage soit influencée, et en ce que la pression de l'agent de traitement de paroi de moule et/ou la pression du fluide secondaire est amenée à correspondre à la pression ainsi influencée.

9. Procédé selon la revendication 8, caractérisé en ce que la pression ainsi influencée est surveillée dans une chambre de mélange (480b) de l'élément de pulvérisation.

10. Procédé selon l'une des revendications 1-9, caractérisé par l'utilisation d'une vanne de dosage (62) à membrane tubulaire, sur l'une des faces de laquelle, de préférence l'intérieur, agit le liquide de traitement de paroi de moule, tandis que le fluide secondaire agit sur l'autre face, et qui, avec une surface de contact (66c) de forme annulaire, définit la section transversale effective de dosage.

11. Procédé selon l'une des revendications 1-10, caractérisé par l'utilisation d'une vanne de dosage (62) dont les faces réagissant à la pression, c'est-à-dire les faces exposées à la pression du liquide de traitement de paroi de moule et à la pression du fluide secondaire, sont sensiblement indépendantes de la forme de la membrane lorsque celle-ci se modifie en cours de fonctionnement.

12. Procédé selon l'une des revendications 1-11, caractérisé en ce qu'au cours d'une opération de pulvérisation, l'élément de pulvérisation (20) est déplacé, par rapport au dispositif de moulage (12), le long d'une trajectoire prédéterminée, et en ce que la section transversale effective de dosage est déterminée en fonction de chaque position individuelle (XYZ) sur la trajectoire et, lorsque la trajectoire est parcourue, ajustée de façon positive pour chaque position individuelle (XYZ).

13. Procédé selon l'une des revendications 1-12, caractérisé en ce qu'au cours d'une opération de pulvérisation, l'élément de pulvérisation (20) est déplacé, par rapport au dispositif de moulage (12), le long d'une trajectoire prédéterminée, et en ce que la quantité d'agent de traitement liquide de paroi de moule distribué par unité de temps par l'élément de pulvérisation (20) est déterminée en fonction de la position individuelle (XYZ) sur la trajectoire et, lorsque la trajectoire est parcourue, ajustée de façon positive pour chaque position individuelle (XYZ).

14. Procédé selon la revendication 13, caractérisé en ce que, dans le cas d'une vitesse variable le long de la trajectoire, la quantité d'agent de traitement liquide de paroi de moule distribué par unité de temps est déterminée en tenant compte de la vitesse, le long de la trajectoire et/ou en tenant compte des paramètres de fonctionnement, tels que la température locale du moule, auxquels on peut avoir accès grâce à des dispositifs de détection appropriés.

Fig. 1

Fig. 2

Fig. 3

EP 0 642 837 B1

Fig. 4

# Fig. 5

EP 0 642 837 B1

Fig. 6

Fig. 7

Fig. 8

Fig. 9

386

386

386

386c

386d

386c1

386c2

386c3

388

# Fig. 10

# Fig. 11

## Fig. 12

Fig. 13

Fig. 14

# Fig. 15

μ

0% ——— 100%

μ_mom = 75%

681

652

639b

646 642

636

637

630

628

638

639 684

641

641a

μ_mom

641c

650

620

P_SL

34

EP 0 642 837 B1

# Fig. 16

EP 0 642 837 B1